# FASCICULE DE BREVET EUROPEEN

(11) **EP 0 102 268 B1**
(45) Date de publication et mention de la délivrance du brevet: **07.01.1987**
(21) Numéro de dépôt: 83401508.3
(22) Date de dépôt: 22.07.1983
(51) Int. Cl.: C08L 83/04

(54) **Compositions organopolysiloxaniques monocomposantes comportant en tant que réticulants des silanes à groupements acyloxyle ou cétoniminoxyle et catalysées par des dérivés organiques du titane ou du zirconium**
Einkomponent-Silikonharzmassen die Acyloxy- oder Ketoximinogruppen enthaltende Silane als Vernetzungsmittel und organische Titan- oder Zirkonverbindungen als Katalysator enthalten
One-component organopolysiloxane compositions containing acyloxy or ketiminoxy silane curing agents, and catalyzed by organic derivatives of titanium or zirconium

(30) Priorité: 30.07.1982 FR 8213505
(43) Date de publication de la demande: 07.03.1984
(73) Titulaire: RHONE-POULENC CHIMIE, 92408 Courbevoie Cédex (FR)
(72) Inventeur: Laisney, Bernard, F-69110 Sainte-Foy-lès-Lyon (FR); Letoffe, Michel, F-69110 Sainte-Foy-lès-Lyon (FR); Perrin, Patrice, F-69000 Lyon (FR); Ulrich, Jean, F-69360 Saint-Syphorien d'Ozon (FR)
(74) Mandataire: Seugnet, Jean Louis (FR)

## Description

La présente invention a pour objet des compositions organopolysiloxaniques, stables au stockage en l'absence d'humidité, durcissant en élastomères, des la température ambiante, en présence d'humidité, formées par mélange de polysiloxanes hydroxylés essentiellement linéaires, de charges, d'agents réticulants choisis parmi les silanes portant liés à l'atome de silicium des groupes hydrolysables soit du type hydrocarbonoyloxy de formule R^{I}COO- (désigné aussi par le terme acyloxy), dans laquelle le symbole R¹ représente un radical hydrocarboné, soit du type cétoniminoxy de formule R²C=NO- dans laquelle les symboles R², identiques ou différents, représentent des radicaux alcoyles et de catalyseurs de durcissement choisis parmi les dérivés organiques du titane et du zirconium.

Ces compositions organopolysiloxaniques sont appelées monocomposantes par opposition aux compositions organopolysiloxaniques bicompo- santes qui durcissent également dès la température ambiante en élastomères mais ne sont pas stables au stockage et de ce fait doivent être conditionnées en 2 emballages séparés.

Des compositions organopolysiloxaniques monocomposantes, proches des compositions faisant l'object de la présente invention sont connues; elles sont divulguées dans de nombreux documents et utilisées dans des domaines d'applications aussi variés que l'automobile, l'électronique, le bâtiment, la médecine. Les catalyseurs cités pour leur préparation sont généralement des sels métalliques d'acides carboxyliques dont le métal peut être le plomb, l'étain, le nickel, le cobalt, le fer, le cadmium, le chrome, le zinc ou le manganèse. En fait le métal préféré est l'étain et les catalyseurs utilisés sont presque toujours des sels d'organoétains d'acides carboxyliques, tels que le diacétate et le dilaurate de dibutylétain. Ce choix est basé sur la meilleure capacité de ces sels d'or- ganoétains d'accélérer le durcissement des compositions en élastomères.

Des compositions monocomposantes connues, préparées à partir d'agent réticulants constitués de silanes ayant des groupes hydrolysables hydrocarbonoyloxy de formule précitée R¹ COO-et de catalyseurs constitués de sels d'organo- étains d'acides carboxyliques, figurent par exemple dans les brevets américains 3 077 465, 3 382 205, 3 701 753, 3 957 714, 4 115 356, 4 273 698 et les brevets français 2 429 811 et 2 459 820.

D'autres compositions monocomposantes connues préparées à partir d'agents réticulants constitués de silanes ayant des groupes hydrolysables cétoniminoxy de formule précitée R²C=NO- et des mêmes sels d'organoétains d'acides carboxyliques figurent en particulier, dans les brevets américains 3 678 003 et 3 986 999 et les brevets français 2 415 132 et 2 421 195.

Parfois les sels d'organoétains d'acides carboxyliques ne sont pas employés tels quels mais sous la forme de leurs produits de réaction avec des esters titaniques (brevet arnércain 3409753).

On sait, que les sels d'organoétains présentent l'inconvénient d'être toxiques; à ce titre, ils ne peuvent être introduits dans des compositions monocomposantes destinées, après durcissement en élastomères, à être en contact avec des produits alimentaires et pharmaceutiques ou même des prothèses. Par ailleurs, l'emploi des compositions monocomposants allant constamment en augmentant, en particulier dans les secteurs industriels du jointoiement, de l'enrobage de matériel électriques et électroniques, et du collage des pièces les plus diverses, il est évident que la dégradation dans le temps des élastomères issus de ces compositions libèrera des sels d'étain qui participeront pleinement à la pollution de l'environnement.

Il existe d'autres familles de catalyseurs utilisables dans les compositions organopolysiloxaniques monocomposantes telle que la famille des dérivés organiques du titane. L'emploi des composés du titane est bien connu pour des compositions contenant uniquement à titre d'agent réticulant des silanes portant des groupes hydrolysables du type hydrocarbonoxy et plus spécialement alcoxy [brevets américains 3 334 067, 4100 129, 4 102 852 et 4 273 698]. Ces catalyseurs sont ainsi réservés pour les compositions organopolysiloxaniques à réticulants porteurs de groupements alkoxyle dits neutres alors que pour les réticulants dits acides et porteurs de groupements hydrocarbonoyloxy ce sont les sels d'étain qui sont recommandés.

En particulier, le brevet américain 4 273 698 illustre bien cette différence d'emploi; ainsi il recommande, colonne 1 lignes 45 à 50 et colonne 7 lignes 1 à 6 et 24 à 25 d'utiliser avec les réticulants choisi parmi les silanes portant des groupes hydrocarbonoyloxy, des catalyseurs constitués de sels d'étain d'acides carboxyliques, et avec les réticulants choisis parmi les silanes portant des groupes alcoxy, des catalyseurs constitués de chelates de titane.

Certes, on trouve dans la littérature chimique des indications suggérant des compositions formées par mélange d'organopolysiloxanes hydroxylés ou portant des groupes hydrolysables englobant les groupes acyloxy et plus spécialement acétoxy, de silanes portant les mêmes groupes hydrolysables et de dérivés organiques du titane.

Mais de telles compositions ne sont pas exemplifiées et il est difficile de relever dans les descriptions une illustration claire d'associations constituées de silanes portant des groupes acyloxy ou cétoniminoxy et de dérivés organiques du titane.

Ainsi l'examen du brevet belge 744184 montre que l'interprétation la plus large des formules générales décrites donne la possibilité d'une association d'un organotriacétoxysilane avec un chélate de titane, l'organotriacétoxysilane étant introduit à raison de 0,1 à 20 parties et le chélate de titane à raison de 0,1 à 30 parties pour 100 parties des α-m dihydroxydiorganopolysiloxanes.

Dans le domaine de l'utilisation, en tant que catalyseurs de durcissement, de dérivés organiques du zirconium, il est connu d'introduire dans des compositions organopolysiloxaniques monocomposantes des sels de zirconium d'acides carboxyliques. Toutefois, cette introduction ne permet pas à elle seule d'obtenir une nette accélération du temps de durcissement des compositions en élastomères. Pour obtenir des durées plus courtes, il est nécessaire d'ajouter un sel d'orga- noétain d'un acide carboxylique tel que le dilaurate de dibutylétain ou le néodécanoate de di- méthylétain (brevet belge 877 845).

Il se posait donc le problème au vu de ce qui précède de trouver un système catalytique non toxique et non polluant efficace en faible quantité, ayant une activité catalytique améliorée et permettant d'obtenir avec un temps de réticulation réduit des élastomères organopolysiloxaniques ayant des propriétés mécaniques satisfaisantes. L'invention répond précisément à ce but.

On a maintenant trouvé qu'un large groupe de composés comprenant des dérivés organiques du titane et des dérivés organiques du zirconium, à l'exception des sels d'acides carboxyliques du zirconium, pouvait avantageusement remplacer les sels d'étain d'acides carboxyliques et plus précisément ceux d'organoétain, comme catalyseurs de durcissement de compositions organopolysiloxaniques monocomposantes dont la fabrication nécessite l'emploi de réticulants constitués de silanes portant des groupes hydrocarbonoyloxy ou cétoniminoxy.

En particulier, ces dérivés organiques du titane et du zirconium peuvent être utilisés à des doses plus faibles que celles des sels d'étain par exemple deux fois plus faibles; en outre, ils sont nettement moins toxiques (principalement les dérivés du titane) que les sels d'organoétain comme le montre l'examen des chapitres qui sont consacrés au titane, au zirconium et à l'étain dans l'ouvrage de E. BERMAN intitulé «Toxic metals and their analy- sis» et édité par HEYDEN (1980).

Plus spécifiquement la présente invention a pour objet des compositions organopolysiloxaniques monocomposantes, stables au stockage en l'absence d'eau, durcissant en élastomères dès la température ambiante en présence d'eau, formées par mélange des constituants suivants:
A) 100 parties d'un polysoloxane essentiellement constitué par un polymère α―ω dihydroxy- diorganopolysiloxanique de viscosité 700 à 1 000 000 mPa-s à 25 °C, constitué d'une succession de motifs diorganosiloxy de formule R₂ SiO dans laquelle les symboles R, identiques ou différents, représentent des radicaux hydrocarbonés ayant de 1 à 8 atomes de carbone, substitués ou non par des atomes d'halogènes, des groupes cyano,
B) 2 à 25 parties d'un agent réticulant de formule (F₁) RₐSi(OCOR¹)₄₋ₐ ou de formule (F₂) Rₑ. Si(ON=CR²₂)₄₋ₐ, dans lesquelles les symboles R ont la signification donnée sous A), le symbole R¹, déjà défini, représente un radical hydrocarboné exempt d'insaturation aliphatique, ayant de 1 à 15 atomes de carbone, les symboles R², identiques ou différents, déjà définis, représentent des radicaux alcoyles ayant de 1 à 8 atomes de carbone et les symboles a et a' représentent zéro ou un,
C) 0,0004 à 0,095 partie d'un catalyseur de durcissement
D) 5 à 150 parties de charges minérales caractérisées en ce que le catalyseur de durcissement C) est soit un dérivé organique du titane, soit un dérivé organique du zirconium, choisis parmi les composés suivants:
   1. Le dérivé organique du titane:
      - les composés appelés (C₁) qui portent par atome de titane au moins un radical organosilicique lié à cet atome de titane par une liaison Ti-0-Si, les autres valences éventuellement restantes de l'atome de titane étant satisfaites par des radicaux situés dans le groupe comprenant des radicaux organiques liés à l'atome de titane par des liaisons Ti-O-C, des radicaux hydroxyles, des atomes d'oxygène des liaisons Ti-O-Ti, et le cas échéant des liaisons de chélation
      - les composés appelés (C₂) qui portent par atome de titane au moins un radical organique lié à cet atome par une liaison Ti-O-C, les autres valences éventuellement restantes de l'atome de titane étant satisfaites par des radicaux situés dans le groupe comprenant des radicaux hydroxyles, des atomes d'oxygène des liaisons Ti-O-Ti, et le cas échéant des liaisons de chélation.
   2. Le dérivé organique du zirconium:
      - les composés qui portent par atome de zirconium au moins un radical organique lié à cet atome de zirconium par une liaison Zr-O-C mais il n'y a pas de liaisons Zr-OCO- provenant d'un reste d'acide carboxylique, les autres valences éventuellement restantes de l'atome de zirconium étant satisfaites par des radicaux situés dans le groupe comprenant des radicaux hydroxyles et des atomes d'oxygène des liaisons Zr-O-Zr, et le cas échéant des liaisons de chélation.

Les liaisons de chélation relient l'atome de titane à un atome ou groupement donneur. En général cette liaison de chélation est souvent assurée par un hétéroatome tel qu'un atome d'oxygène, d'azote ... Les liaisons de chélation sont par exemple issues de groupements p-dicétoni- ques, p-cétoester ...

Les polysiloxanes utilisables sont comme on l'a déjà dit essentiellement constituées de polymères α―ω dihydroxydiorganopolysiloxaniques (A) de viscosité 700 à 1 000 000 mPa.s à 25 °C, de préférence 1000 à 700 000 mPa-s à 25 °C, formés d'une succession de motifs diorganosiloxy de formule précités R₂SiO et bloqués à chaque extrémité de leur chaine par un groupe hydroxyle; ces polysiloxanes peuvent également comporter des motifs monoorganosiloxy de formule RSiO_{1,5} et/ou de motifs siloxy de formule Si0₂, dans la proportion d'au plus 2% par rapport au nombre de motifs diorganosiloxy.

Les radicaux hydroxarbonés, substitués ou non par des atomes d'halogènes ou des groupes cyano, représentés par les symboles R, peuvent être choisis parmi:
- les radicaux alocyles et halogénoalcoyles ayant de 1 à 8 atomes de carbone tels que les radicaux méthyles, éthyles, n-propyles, isopropyles, n-butyles, n-pentyles, n-hexyles, éthyl-2 hexyles, n-octyles, trifluoro-3,3,3 propyles, trifluoro-4,4,4 butyles, pentafluoro-4,4,4,3,3 butyles
- les radicaux cycloalcoyles et halogénocy- cloalcoyles ayant de 4 à 8 atomes de carbone tels que les radicaux cyclopentyles, cyclohexyles méthylcyclohexyles, difluoro-2,3 cyclobutyles, difluoro-3,4 méthyl-5 cycloheptyles
- les radicaux alcényles ayant de 2 à 4 atomes de carbone tels que les radicaux vinyles, allyles, butène-2 yles
- les radicaux aryles et halogénoaryles ayant de 6 à 8 atomes de carbone tels que les radicaux phényles, tolyles, xylyles, chlorophényles, dichlo- rophényles, trichlorophényles
- les radicaux cyanoalcoyles dont les chainons alcoyles ont de 2 à 3 atomes de carbone teles que les radicaux β-cyanoéthyles et y-cyanopropyles.

A titre d'exemples concrets de motifs représentés par la formule R₂SiO, on peut citer ceux de formules:
(CH₃)₂SiO,
CH₃(CH₂=CH)SiO,
CH₃(C₆H₅)SiO,
(C₆Hₛ)₂SiO,
CF₃CH₂CH₂(CH₃)SiO,
NC-CH₂CH₂(CH₃)SiO,
NC-CH(CH₃)CH₂(CH₂ =CH)SiO,
NC-CH₂CH₂CH₂(C₆H₅)SiO.

Il doit être compris, selon une variante de l'invention, que l'on peut utiliser comme polymères (A) un mélange constitué de polymères α-ω dihydroxydiorganopolysiloxaniques qui diffèrent entre eux par le poids moléculaire et/ou la nature des groupements liés aux atomes de silicium.

Ces polymères α-ω dihydroxydiorganopolysiloxaniques (A) sont commercialisés; en outre, ils peuvent être aisément fabriqués. L'une des techniques de fabrication les plus courantes consiste, dans une première phase, à polymériser des diorganocyclopolysiloxanes à l'aide de quantités catalytiques d'agents alcalins ou acides puis à traiter les polymèrisats avec des quantités calculées d'eau (brevets français 1 134 005 1 198 749, 1 226 745); cet apport d'eau, qui est d'autant plus élevé que les polymères à préparer ont une viscosité plus faible, peut être remplacé en totalité ou en partie par des huiles a-w dihydroxydiorganopolysiloxaniques de faible viscosité, par exemple allant de 5 à 200 mPa-s à 25 °C, ayant un taux élevé de radicaux hydroxyles, par exemple de 3 à 14%.

Dans une deuxième phase les polymères sont isolés en éliminant, à une température en général supérieure à 100 °C et sous une pression de préférence inférieure à la pression atmosphérique, les diorganocyclopolysiloxanes équilibrant la réaction ainsi que les autres polymères de poids moléculaire peu élevé, formés lors de cette réaction. Il est recommandé, avant de distiller les produits volatils, de neutraliser les agents alcalins ou acides utilisés comme catalyseurs de polymérisation.

Les polymères (A) préférés sont les α―ω dihy- droxydiméthylpolysiloxanes qui sont donc constitués essentiellement de motifs de formule (CH₃)₂SiO; toutefois ils peuvent renfermer au plus 10% en moles de motifs de formule CH3(CH₂=CH)SiO et/ou (C₆H₅)₂SiO.

Les agents réticulants (B) sont employés à raison de 2 à 25 parties, de préférence 3 à 20 parties, pour 100 parties des polymères α―ω dihydroxydiorganopolysiloxaniques (A). Ils répondent aux formules précitées (Fi) RₐSi(OCOR¹)₄₋ₐ et (F₂) Rₐ,Si(ON=CR²)₄₋ₐ.

La signification générale des différents symboles de ces formules a été donnée précédemment; de plus des précisions ont été fournies sur la nature des radicaux représentés par les symboles R.

Des précisions sont maintenant apportées sur la nature des radicaux représentés par les symboles R¹ et R².

Ainsi les symboles R¹ représentent des radicaux hydrocarbonés, exempt d'insaturation aliphatique, choisis parmi:
- les radicaux alcoyles ayant de 1 à 15 atomes de carbone tels que les radicaux méthyles, éthyles, n-propyles, n-butyles, n-pentyles, éthyl-1 pentyles, n-hexyles, n-octyles, néodécyles, n-décyles, n-dodécyles, n-pentadécyles,
- les radicaux cycloalcoyles ayant de 5 à 6 atomes de carbone nucléaire tels que les radicaux cyclopentyles et cyclohexyles,
- les radicaux aryles ayant de 6 à 8 atomes de carbone tels que les radicaux phényles, tolyles, xylyles.

Quant aux symboles R², ils représentent des radicaux alcoyles ayant de 1 à 8 atomes de carbone tels que les radicaux méthyles, éthyles, n-propyles, n-butyles, n-pentyles, éthyl-1 pentyles, n-hexyles, n-octyles.

A titre d'exemples concrets d'agents rétiyulants (B), peuvent être cités ceux répondant aux formules suivantes:
- Formule F₁:
   CH₃Si(OCOCH₃)₃, C₂H₅Si(OCOCH₃)₃,
   CH₂=CHSi(OCOCH₃)₃,
   C₆H₅Si(OCOCH₃)₃,
   CH₃Si[OCOCH(C₂H₅)(CH₂)₃-CH₃]₃,
   CF₃CH₂CH₂Si(OCOC₆H₅)₃,
   CH₃Si(OCOC₆H₅)₃,
   CH₃Si(OCOCH₃)₂0COCH(C₂H₅)(CH₂)₃CH₃,
   CH₃COOSi [OCOCH (C₂H₅) (CH₂)₃CH₃]₃,
- Formule F₂:
   CH₃Si[ON=C(CH₃)₂]₃,
   CH₃Si[ON=C(CH₃)C₂H₅]₃,
   CH₂=CHSi[ON =C(CH₃)C₂H₅]₃.
   C₆H₅Si[ON=C(CH₃)₂]₃,
   CH₃Si[ON =C(C_{2H5}) (CH₂)₃CH₃]₃,
   CH₃Si[ON=C(CH₃)CH(C₂H₅)(CH₂)₃CH₃]₃,
   (CH₃)₂C =NOSI[ON=C(CH₃)C₂H₅]₃

Avec ces agents réticulants (C) peuvent être associés des silanes portant seulement chacun deux groupes hydrolysables; ces silanes répondent aux formules (F₃) R²₃Si(OCOR¹)₂ et (F₄) R₂Si(ON=CR² ₂)₂ dans laquelle les symboles R, R¹ et R² ont la signification des symboles R, R¹ et R² des formules (F₁) et (F₂), et les symboles R³ ont la signification des symboles R ou représentent des radicaux tertiobutoxy de formule (CH₃)₃CO-.

A titre d'exemples concrets de ces silanes, peuvent être cités ceux de formules ci-après:
- Formule F₃:
   (CH₃)₂Si(OCOCH₃)₂,
   [(CH₃)₃CO]₂Si(OCOCH₃)₂,
   CH₂=CH (CH₃)Si(OCOCH₃)₂,
   (C₆H₅)₂Si(OCOCH₃)₂,
   (CH₃)₂Si[OCOCH(C₂H₅)(CH₂)₃CH₃]₂,
   [(CH₃)₃CO]₂Si[OCOCH(C₂H₅)[CH₂]₃CH₃]₂·
- Formule F₄:
   (CH₃)₂Si[ON=C(CH₃)₂]₂.
   CH₃(CH₃=CH)Si[ON=C(CH₃)C₂H₅]₂,
   (CH₃)₂Si[ON=C(CH₃)CH(C₂H₅) (CH₂)₃ (CH₃)]²

Il est nécessaire d'utiliser une quantité molaire des silanes (F₃) et (F₄) telle que chacun de leur mélange avec les agents réticulants (B) renferme en moyenne au moins 2,5 groupes hydrolysables par atome de silicium.

Il doit être entendu que chaque mélange comporte nécessairement des groupes hydrolysables de même nature chimique; on aura donc des associations de silanes de formules (F₁) et (F₃) et de silanes de formules (F₂) et (F₄).

Le rôle principal des silanes de formule (F₃) et (F₄) est celui de coupler les chaines des polymères α―ω dihydroxydiorganopolysiloxaniques (A) ce qui permet d'obtenir des élastomères ayant de bonnes caractéristiques physiques en partant de compositions renfermant des polymères (A) dont la viscosité est relativement faible par exemple allant de 700 à 5000 mPa·s à 25 °C.

Les catalyseurs de durcissement (C) sont utilisés à raison de 0,0004 à 0,095 partie, de préférence de 0,0008 à 0,08 partie, pour 100 parties des polymères α―ω dihydroxydiorganopolysiloxanes (A).

Il sont choisis comme déjà indiqué, parmi les dérivés organiques du titane (Ci) et (C₂) et les dérivés organique du zirconium.

Les dérivés du titane (C₁) comportent nécessairement par atome de titane au moins un radical organosilicique lié par une liaison Ti-O-Si, les valences éventuellement restantes étant satisfaites par des radicaux organiques liés par des liaisons Ti-O-C, des radicaux hydroxy, des atomes d'oxygène des liaisons Ti-O-Ti, ou encore des liaisons de chélation.

Ces dérivés (C₁) englobent, en particulier, ceux répondant à la formule générale (F₅) (G₃SiO)₄₋ₓTi(G')ₓ dans laquelle
- les symboles G, identiques ou différents représentent des radicaux hydrocarbonés ayant de 1 à 8 atomes de carbone, des radicaux alcoxyles ayant de 1 à 4 atomes de carbone, des radicaux β-méthoxyéthoxyles,
- les symboles G', représentent des radicaux situés dans le groupe formé de ceux de formules (OCH₂CH₂)_{b}OR⁴,-OC(Q') =C(R⁵)COQ,

En outre deux radicaux G' peuvent ensemble constituer le radical divalent de formule:

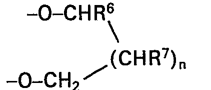

Ce radical divalent ainsi obtenu étant rattaché par ses 2 valences à l'atome de titane; l'ensemble représente un hétérocycle.

Dans ces 3 formules:
- le symbole R⁴ représente un radical alcoyle ayant de 1 à 12 atomes de carbone,
- le symbole b représente zéro ou un; quand le symbole b représente zéro, le radical alcoyle R⁴ a de 2 à 12 atomes de carbone, et quand le symbole b représente 1 le radical alcoyle a de 1 à 3 atomes de carbone,
- le symbole Q représente unatome d'hydrogène, un radical alcoyle ayant de 1 à 4 atomes de carbone, un radical phényle, un radical alcoxyle ayant de 1 à 5 atomes de carbone, un radical dialcoylamino dont les groupes alcoyles liés à l'atome d'azote ont de 1 à 4 atomes de carbone,
- le symbole R⁵ représente un atome d-Hydrogène, un radical méthyle, un radical chloro- méthyle, un radical acétyle,
- le symbole Q' représente un radical alcoyle ayant de 1 à 5 atomes de carbone, un radical chlo- rométhyle,
- les symboles R⁶ et R⁷, identiques ou différents représentent des atomes d'hydrogène, des radicaux méthyles,
- le symbole n représente zéro, 1 ou 2.
- le symbole x représente zéro, un, deux ou trois.

On observera que les titanates silylés de formule F₅, peuvent comporter outre les liaisons covalen- tes des liaisons chélatantes qui n'ont pas été représentées. Un tel cas se présente lorsque le symbole G' représente un groupement β-dicétonique ou β-cétoester.

A titre illustratif de radicaux hydrocarbonés représentés par les symboles G peuvent être cités:
- des radicaux alcoyles ayant de 1 à 8 atomes de carbone tels que les radicaux méthyles, éthyles, n-propyles, n-butyles, éthyl-2 hexyle, n-octyles,
- des radicaux alcényles ayant de 2 à 4 atomes de carbone tels que les radicaux vinyles, allyles, butène-2 yles,
- des radicaux aryles ayant de 6 à 8 atomes de carbone tels que les radicaux phényles, tolyles, xylyles.

A titre illustratif de radicaux alcoxyles ayant de 1 à 4 atomes de carbone représentés par les symboles G peuvent être cités les radicaux méthoxyles, éthoxyles, n-propoxyles, n-butoxyles.

A titre illustratif de radicaux alcoyles, ayant de 1 à 12 atomes de carbone représentés par le symbole R⁴ peuvent être cités les radicaux méthyles, éthyles, isopropyles, n-propyles, n-butyles, iso- butyles, éthyl-2 hexyles, n-octyles, n-décyles, n-dodécyles.

A titre illustratif des radicaux Q et représentant respectivement
(e) des radicaux alcoyles ayant de 1 à 4 atomes de carbone
(2e) des radicaux alcoxyles ayant de 1 à 5 atomes de carbone
(3e) des groupes dialcoylamino dont les radicaux alcoyles ont de 1 à 3 atomes de carbone on citera respectivement
(e') les radicaux méthyles, éthyles, n-propyles, n-butyles
(2e') les radicaux méthoxyles, éthoxyles, n-pro₋ poxyles, n-butoxyles, n-pentoxyles
(3e') les groupes de formules -N(CH₃)₂, -N(C₂H₅)2,-N(n·C₃H₇)₂

A titre illustratif de radicaux alcoyles ayant de 1 à 5 atomes de carbone représentés par le symbole Q' peuvent être cités les radicaux méthyles, éthyles, n-propyles, n-butyles, n-pentyles.

Comme exemples concrets de dérivés du titane (Ci), illustrant la combinaison des différentes significations des symboles de la formule (F₅) peuvent être mentionnés ceux répondant aux formules ci-après:
x ⁼ zéro
   Ti[OSi(CH₃)₃]₄
   Ti[OSi(CH₃)₂CH=CH₂]₄
X=1
   (n·C₄H₉O)Ti[OSi(CH₃)₃]₃
   CH₃OCH₂CH₂OTi[OSi(CH₃)₃]₃
   C₂H₅OTi[OSi(CH₃)₂CH₂=CH]₃
x=2
   (n·C₄H₉O)₂Ti[OSi(CH₃)₃]₂
   [C₂H₅OCOCH=C(CH₃)O]₂Ti[OSi(CH₃)₂C₆H₅]₂ 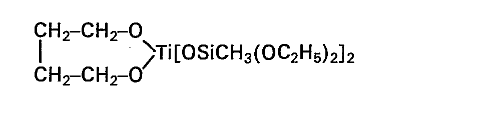
x=3
   [CH₃CO-CH=C(CH₃)0]₃TiO-Si(OCH₂CH₂0CH₃)₃
   [CH₃(CH₂)₃CH(C₂H₅)CH₂O]₃TiOSi(CH₃)₃
   (iso-C₃H₇O)₃TiOSi(CH=CH₂) (OCH₃)₂

Les composés C₁ peuvent également être des composés ayant une formule analogue à F₅ et dans laquelle figurent outre des radicaux (G₃-SiO) et G', des radicaux-0-CO-R₈, R₈ représentant un radical hydrocarboné ayant de 1 à 20 atomes de carbone.

La préparation des dérivés du titane de formule (F₅) est décrite plus particulièrement dans l'ouvrage de R. FELD et P.L. COWE «The Organic Chemistry of Titanium» pages 96 à 108, édité par Butterworths (1965) ainsi que dans le brevet français 1 359 396.

On met généralement en contact un silane portant au moins un radical acyloxy ou un radical hydroxyle avec un tétraorganotitane dont les radicaux organiques sont liés à l'atome de titane par des liaisons TiOC (qu'on peut nommer tétraorga- noxytitane). On peut également chauffer un mélange d'un oxyde de diorganoxytitane et d'un silicate d'alcoyle. Il est préférable pour éviter la formation de quantités importantes de produits polymérisés, d'ajouter progressivement le composé organosilicique dans le réacteur contenat la totalité du dérivé organique du titane.

Les catalyseurs de durcissement (C) comportent aussi des dérivés organiques du titane appelés précédemment (C₂) et qui, à l'opposé des dérivés (Cₗ), sont exempts de radicaux organosiliciques. Ces dérivés du titane (C₂) portent par atome de titane au moins un radical organique lié par un liaison TiOC, les valences éventuellement restantes étant satisfaites par des radicaux situés dans le groupe formé des radicaux hydroxyles des atomes d'oxygène des liaisons TiO-Ti, ou encore des liaisons de chélation.

Ces dérivés (C₂) répondent préférentiellement à la formule (F₆) (G')_{y}Ti(OCOR⁸)_{4-y} dans laquelle:
- les symboles G' ont la même signification que celle des symboles G' de la formule (F₅); ainsi ils représentent des radicaux précités choisis dans le groupe formé de ceux de formules:
   -(OCH₂CH₂)_{b}OR⁴
   -OC(Q')=C(R⁵) COQ 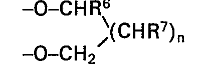
- le symbole y représente un nombre entier ou fractionnaire allant de zéro à quatre,
- le symbole R⁸ représente un radical hydrocarboné ayant de 1 à 20 atomes de carbone.

A titre illustratif de radicaux hydrocarbonés représentés par le symbole R⁸ peuvent être cités:
- les radicaux alcoyles ayant de 1 à 20 atomes de carbone tels que les radicaux méthyles, éthyles, n-butyles, éthyl-2 pentyles, n-octyles, n-décyles, n-dodécyles, n-octadécyles, n-éicosyles
- les radicaux alcényles ayant de 2 à 4 atomes de carbone tels que les radicaux vinyles, méthyl-1 vinyles, allyles, méthyl-2 allyles
- les radicaux aryles à un seul noyau benzénique ayant de 6 à 8 atomes de carbone tels que les radicaux phényles, tolyles, xylyles.

Comme exemples concrets de dérivés du titane (C₂) illustrant les combinaisons des différentes significations des symboles de la formule (F₆), peuvent être cités ceux répondant aux formules ci-après:
y =0
   Ti(OCO-n·C₁₇H₃₅)₄
   Ti(OCOCH₂CH₃)₄
y =0,7
   [(CH₃)₂CHO]_{0,7}Ti[OCOC(CH₃) =CH₂]_{3,3}
y =1
   (CH₃)₂CHO-Ti[OCOCH(C₂Hₛ)(CH₂)₃CH₃]₃
   n·C₄H₉OTi(OCO-n·C₁₇H₃₅)₃
   (CH₃)₂CHO-Ti[OCOC(CH₃)-CH₂]₃
y=2
   [(CH₃)₂CHO]₂Ti(OCOCH₃)₂
   (C₂H₅O)₂Ti(OCOC₆H₅)₂
   (n·C₄H₃O)₂Ti(OCOCH =CH₂)₂
y=3
   (C₂HₛO)₃TiOCOCH₃
   (C₂H₅O)₃TiOCOC₆H₅
y=4
   (1 ) avec agent chélatant (les liaisons chélates n'étant pas représentées)
      (n·C₄H₉O)₂Ti[OC(CH₃) =CH-COCH₃]₂
      [(CH₃)₂CHO]₃TiOC(CH₃)=CH-COOC₂H₅ 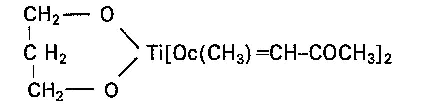 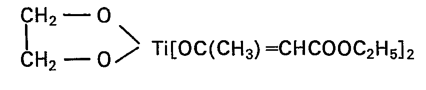
   (2) sans agent chélatant
      (n·C₄H₉O)₄Ti
      (C₂H₅O)₄Ti
      [(CH₃)₂CHl]₄Ti
      (n·C₃H₇O)₄Ti
      (n·C₈H₁₇O)₄Ti
      (CH₃OCH₂CH₂O)₄Ti
      [CH₃(CH₂)₃CH(C₂H₅)CH₂O]₄Ti

La préparation des dérivés du titane (C₂) de formule (F₅) est décrite dans l'ouvrage précité de R. FELD et P.L. COWE intitulé «The Organic Chemistry of Titanium», l'ouvrage de D.C. BRADE-LEY, R.C. MEHROTRA et D.P. GAUR intitulé «Metal Alkoxides» édité par Academic Press (1987) et le brevet français 1 359 396.

Il faut ajouter le brevet belge 841 732 qui traite en particulier de la préparation d'alcoxyacyloxyti- tanes par introduction progressive de l'acide carboxylique dans un réacteur contenant un tétraal- coxytitane porté à une température généralement supérieure à 100 °C; l'alcool est éliminé en fin de réaction. Un autre document est également à prendre en considération, c'est le brevet français 2 121 289; il traite de la préparation de chélates de titane du type de celui de formule précitée: 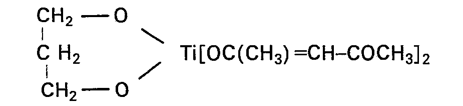 par mise en contact à une température peu élevée (au-dessous de 100 °C), d'un alcanediol avec un chélate de titane portant des radicaux alcoxyle.

Les dérivés organiques du titane (C₂) comprennent, en outre, des polytitanoxanes à radicaux principalement acyloxy; ce sont des polymères de faible poids moléculaire, ne dépassant guère 20 motifs, formé d'une succession de motifs de formule (F₇)
-Ti(OCOR⁸)y-[(OCH₂CH₂)bOR⁴)_{2-y},O-

dans laquelle les symboles R⁸, R⁴ et b ont la signification des symboles R⁸, R⁴ et b de la formule (F₆) et le symbole y' représente 1 ou 2.

A titre d'exemples concrets de motifs de formule (F₇) peuvent être cités ceux de formules ci-après:
-Ti[OCH(CH₃)2][OCOCH(C₂H₅)(CH₂)₃CH₃]O-
-Ti[OCOCH(C₂H₅)(CH₂)₃CH₃]₂O-
-Ti(OCO n·C₁₇H₃₅)₂O-

Ils sont préparés en deux stades:
(1 ) tout d'abord chauffage à des températures de préférence situées dans l'intervalle 50 à 150 °C de mélanges constitués de composés de formule (F₈) Ti[(OCH₂CH₂)_{b}OR⁴]₄ et d'acide organiques de formule R⁸COOH
(2) ensuite élimination des composés volatils engendrés comprenant des alcools de formule R⁴0(CH₂CH₂O)_{b}H et des esters de formule R⁸CO(OCH₂CH₂)_{b}OR⁴. On utilise géneralement 1 à 3 moles d'acide organique pour une mole d'ester titanique. Un tel mode opératoire figure dans le brevet américain 2 621 193.

La structure des polymères obtenus n'est pas exactement connue; ces polymèrs sont probablement constitués, en fonction du rapport molaire des réactifs mis en oeuvre (acide organique/ester titanique),
- soit essentiellement de motifs de formule:
   Ti(OCH₂CH₂)_{b}OR⁴-(OCOR⁸)O-
- soit d'un mélange de motifs de formule:
   Ti(OCH₂CH₂)_{b}OR⁴-(OCOR⁸)O-

   et de motifs de formule -Ti(OCOR⁸)₂0-
- soit essentiellement de motifs de formule:
   Ti(OCOR⁸)₂0

Les dérivés organiques du titane (C₂) comprennent aussi des titanates d'alcanolamines résultant le plus souvent de la réaction d'esters titaniques de formule précitée (F₈) Ti[(OCH₂CH₂)_{b}OR⁴]₄ avec des hydroxyalcoylamines telles que des éthanolamines. Parmi ces éthanolamines sont plus spécialement utilisées la triéthanolamine, la diéthanolamine et la méthyldiéthanolamine.

Ces titanates d'alcanolamines sont des produits mal définis; ils sont préparés généralement par chauffage, ou par abandon à la température ambiante, de mélanges formés des esters titaniques et des alcanolamines décrites ci-avant, à raison par exemple de 1 à 4 moles d'alcanolamines pour 1 mole des esters titaniques; il est préférable d'éliminer l'alcool engendré de formule R⁴0(CH₂CH₂0)_{b}H.

Des modes opératoires de ce type figurent dans le brevet anglais 755 728 et les brevets français 1 087 874 et 1 148 113.

Les dérivés du titane (Ci) et (C₂) englobent également les produits d'hydrolyse partielle des composés précédents de formules F₅ et F₆.

Ces produits d'hydrolyse partielle sont des polymères comportant des structures linéaires et/ou des structures plus complexes comme indiqué dans l'ouvrage précité de R. FELD et P.L. COWE «The Organic Chemistry of Titanium» aux pages 25 à 31 et 101 et dans l'ouvrage précité de D.C. BRADLEY, R.C. MEHROTRA, D.P. GAUR «Metal Akoxides» aux pages 150 à 162.

La structure de ces polymères dépend étroitement de la valeur du rapport molaire des réactifs de départ, de la nature des radicaux liés à l'atome de titane et des conditions opératoires d'hydrolyse.

Cette structure comprend évidemment des liaisons Ti-O-Ti et des radicaux, liés aux atomes de titane, situés dans le groupe formé des radicaux de formules G₃SiO-, G'-, R⁸COO-, HO-, les symboles G, G' et R⁸ appartenant aux symboles des formules (F⁵) et (F⁶).

Il est nécessaire toutefois que ces polymères soit d'une part stables au stockage et d'autre part solubles dans les solvants organiques usuels (comme le toluène, le xylène, le cyclohexane); il est préférable qu'au moins 50 parties de ces polymères soient solubles dans 100 parties des solvants.

Les catalyseurs de durcissement (C) utilisables selon l'invention renferment aussi les dérivés organiques du zirconium qui portent par atome de zirconium au moins un radical organique lié à cet atome par une liaison ZrOC qui n'englobe pas la liaison ZrOCO-. Les valences éventuellement non satisfaites de l'atome de Zr sont satisfaites par des radicaux choisis dans le groupe formé des radicaux hydroxyles et des atomes d'oxygène des liaisons Zr-O-Zr, ou encore des liaisons chélatantes.

De préférence, les dérivés organiques du zirconium sont choisis parmi les composés de formule (Fₛ) Zr[(OCH₂CH₂)_{b}OR⁴]₄ dans laquelle les symboles R⁴ et b ont la signification des symboles R⁴ et b appartenant aux formules (F5) et (F₆).

A titre d'exemples concrets des dérivés de formule (Fg) peuvent être cités ceux de formules ci-après:
Zr(OC₂H₅)₄
Zr[OCH(CH₃)₂]₄
Zr(O-n·C₃H₇)₄
Zr(O-n·C₄H₉)₄
Zr[OC(CH₃)₃]₄
Zr(OCH₂CH₂0CH₃)₄
Zr[OCH₂CH (C₂H₅) (CH₂)₃CH₃]₄
Zr(O-n·C₁₇H₃₅)₄

Ce sont des composés connus, aisés à fabriquer, comme indiqué aux pages 20 et 30 de l'ouvrage précité de D.C. BRADLEY, R.C. MEHROTRA et D.P. GAUR «Metal Alkoxides».

Les dérivés organiques du zirconium comportent en outre les produits d'hydrolyse partielle des composés précédents de formule (Fg). Ce sont des polyzirconates dont la structure, fort complexe, est mal connue; cette structure dépend étroitement du degré d'hydrolyse et de la nature des radicaux -(OCH₂CH₂)_{b}OR⁴ liés à l'atome du zirconium.

Il est nécessaire cependant que ces polymères soient liquides, stables et solubles dans les solvants hydrocarbonés usuels comme le toluène, le xylène, le méthylcyclohexane; il est préférable qu'au moins 50 parties de ces polymères soient solubles dans 100 parties des solvants hydrocarbonés. Des informations sur la structure des polyzirconates figurent dans l'ouvrage précité de D.C. BRADLEY, R.C. MEHROTRA et D.P. GAUR «Metal alkoxides», en particulier aux pages 163 et 164.

Les charges ( D) sont utilisées à raison de 5 à 150 parties, de préférence de 8 à 100 parties, pour 100 parties des polymères a-p dihydroxydiorganopolysiloxanes (A). Ces charges peuvent se présenter sous la forme de produits très finement divisés dont le diamètre particulaire moyen est inférieur à 0,1 µm. Parmi ces charges figurent les silices de combustion et les silices de précipitation; leur surface spécifique est généralement supérieure à 40 ₘ²_{/}g.

Ces charges peuvent également se présenter sous la forme de produits plus grossièrement divisés, de diamètre particulaire moyen supérieur à 0,1 µm. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum; leur surface spécifique est généralement inférieur à 30 ₘ2_{/}g.

Des charges (D) peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisi- loxanes, des hexaorganodisilazanes ou des dior- ganocyclopolysilazanes (brevets français 1 126 884; 1 136 885; 1 236 505; brevet anglais 1 024 234). Les charges traitées renferment, dans la plupart des cas, de 3 à 30% de leur poids de composés organosiliciques.

Les charges (D) peuvent être constituées d'un mélange de plusieurs types de charges de granulométrie différente; ainsi par exemple elles peuvent être constituées de 30 à 70% de silices finement divisées de surface spécifique supérieure à 40 m²/g et de 70 à 30% de silices plus grossièrement divisées de surface spécifique inférieure à 30 _{m2/}g.

Les compositions organopolysiloxaniques, objets de l'invention peuvent comporter (en dehors des constituants A, B, C et D) des adjuvants et additifs usuels, comprenant en particulier des stabilisants thermiques. Ces derniers produits, qui par leur présence, améliorent la résistance thermique des élastomères silicones, peuvent être choisis parmi les sels, oxydes et hydroxydes de terres rares (et plus spécialement parmi les oxydes et hydroxydes cériques) ou parmi les oxydes de titane et de fer obtenus, de préférence, par combustion.

Avantageusement les compositions selon l'invention contiennent de 0,1 à 15 parties, et de préférence de 0,15 à 12 parties, de stabilisants thermiques pour 100 parties de polymères α―ω dihydroxydiorganopolysiloxaniques (A).

Outre les constituants principaux A, B, C, D et les additifs précités, des composés organopolysiloxaniques particuliers peuvent être introduits dans le dessein d'agir sur les caractéristiques physiques des compositions conformes à l'invention et/ou sur les propriétés mécaniques des élastomères issus du durcissement de ces compositions.

Ces composés organopolysiloxaniques sont bien connus; ils comprennent plus spécialement:
(1f) des polymères α―ω-bis(trioganosiloxy) diorganopolysiloxaniques et ou a-(hydroxy) ω-(triorganosiloxy)diorganopolysiloxaniques, de viscosités d'au moins 10 mPa·sà25 °C, formés essentiellement de motifs diorganisiloxyles et d'au plus 1 % de motifs monoorganosiloxyles et/ou si- loxyles, les radicaux organiques liés aux atomes de silicium étant choisis parmi les radicaux méthyles, vinyles, phényles, 60% au moins de ces radicaux organiques étant des radicaux méthyles et 10% au plus étant des radicaux vinyles. La viscosité de ces polymères peut atteindre plusieurs diazines de millions de mPa·s à 25 °C; ils comprennent donc des huiles d'aspect fluide à visqueux et des gommes molles à dures. Ils sont préparés selon les techniques usuelles décrites plus précisément dans les brevets français 978 058, 1 025 150, 1 108 764, 1 370 884. On utilise de préférence des huiles α―ωbis(triméthylsiloxy)diméthylpolysiloxaniques de viscosité allant de 10 mPa-s à 1000 mPa_{'}s à 25 °C. Ces polymères peuvent être introduits à raison d'au plus 150 parties, de préférence de 5 à 120 parties, pour 100 parties des polymères α―ωdi(hydroxy)diorganopolysiloxaniques (A).
(2f) des polymères méthylpolysiloxaniques ramifiés, liquides, ayant de 1,4 à 1,9 radical méthyle par atome de silicium constitués d'une combinaison de motifs de formules (CH₃)₃SiOₒ,₅, (CH₃)₂SiO et CH₃SiO_{1,5}; ils renferment de 0,1 à 8% de groupes hydroxyles. Ils peuvent être obtenus par hydrolyse des chlorosilanes correspondants comme l'enseignent les brevets français 1 408 662 et 2 429 811. On utilise, de préférence, des polymères ramifiés dont les motifs sont réparties, selon les rapports suivants:
   (CH₃)₃SiO_{0,5}/(CH₃)₂SiO =0,01 à 0,15 et
   CH₃SiO_{1,5}/(CH₃)₂SiO =0,1 à 1,5.

Ces polymères peuvent être introduits à raison d'au plus 70 parties, de préférence de 3 à 50 parties, pour 100 parties des polymères α―ω-di(hydroxy)diorganopolysiloxaniques (A).

(3f) des huiles diorganopolysiloxaniques bloquées par des groupes hydroxyles et/ou alcoxyles inférieurs ayant de 1 à 4 atomes de carbone, de faible viscosité en général comprise dans l'intervalle 2 mPa·s à 4 000 mPa-s à 25 °C (si ces huiles sont bloquées uniquement par des groupes hydroxyles leur viscosité est inférieure à 700 mPa·s à 25 °C); les radicaux organiques liés aux atomes de silicium de ces huiles sont, comme précédemment, choisis parmi les radicaux méthyles, vinyles, phényles, 40% au moins de ces radicaux étant des radicaux méthyles et 10% au plus étant des radicaux vinyles.

Comme groupes alcoxyles inférieurs bloqueurs de chaine peuvent être cités les groupes méthoxyles, éthoxyles, isopropoxyles, n-propoxyles, n-butoxyles, isobutoxyles, tertiobutoxyles. Les taux en groupes hydroxyles et/ou alcoxyles s'étalent généralement de 0,5 à 20%. Ces huiles sont préparées selon des techniques usuelles décrites plus précisément dans les brevets français 938 292, 1 104674, 1 116 196, 1 278 281, 1 276 619. De préférence, on utilise des huiles α―ω dihydroxydi- méthylpolysiloxaniques de viscosité 10 à 300 mPa-s à 25 °C, des huiles α―ω dihydroxy- méthylphénylpolysiloxaniques de viscosité 200 à 600rnPa·s à 25 °C, et des huiles α―ω dimé- thoxy-(ou diéthoxy) diméthylpolysiloxaniques de viscosité 30 à 2000 mPa·s à 25 °C. Elles peuvent être introduites à raison d'au plus 50 parties, de préférence de 2 à 40 parties, pour 100 parties des polymères α―ω di(hydroxy) diorganopolysiloxaniques (A).

(4f) des composés organosiliciques hydroxylés choisis parmi les composés répondant à la formule générale Z'SiZ₂(OSiZ₂)_{W}OH, qui sont solides à la température ambiante. Dans cette formule les symboles Z, identiques ou différents, représentent des radicaux méthyles, éthyles, n-propyles, vinyles, phényles; le symbole Z' représente un radical hydroxyle ou Z et le symbole w représente zéro, 1 ou 2. A titre d'exemples concrets de ces composés peuvent être cités: le diphénylsilane diol, le méthylphénylsilanediol, le diméthylphénylsilanol, le tétraméthyl-1,1,3,3 disiloxanediol, le di- méthyl-1,3 diphényl-1,3 disiloxanediol, le tétraméthyl-1,1,5,5 diphényl-3,3 trisiloxanediol. Ils peuvent être introduits à raison d'au plus 30 parties, de préférence 0,5 à 20 parties, pour 100 parties de polymères α―ω-di (hydroxy) diorganopolysiloxaniques (A). Les polymères α―ω bis-(triorganosiloxy) diorganopolysiloxaniques et/ou α―ω (hydroxy) ω-(triorganosiloxy) diorganopolysiloxaniques décrits sous (1f) peuvent être remplacés, totalement ou partiellement, par des composés organiques inertes vis-à-vis des constituants A, B, C D et miscibles au moins avec les polymères α―ω-di(hydroxy) diorganopolysiloxaniques (A). Comme exemples concrets de ces composés organiques peuvent être mentionnés les polyalcoylbenzènes obtenus par alcoylation du benzène à l'aide d'oléfines à longue chaine, en particulier des oléfines à 12 atomes de carbone issues de la polymérisation du propylène. Des composés organiques de ce type figurent par exemple dans les brevets français 2 392 476 et 2 446 849.

Pour fabriquer les compositions conformes à l'invention, il est recommandé d'utiliser un appareillage qui permette de brasser intimement à l'abri de l'humidité, avec et sans apport de chaleur, les constituants A, B, C et D ainsi qu'éventuellement les adjuvants et additifs précités.

Tous ces ingrédients peuvent être chargés dans l'appareillage selon un ordre quelconque d'introduction. Ainsi il est possible de mélanger tout d'abord les huiles α-w-dihydroxydiméthylpolysil0- xaniques (A) et les charges (D) et d'ajouter ensuite à l'empâtage obtenu les agents réticulants (B) et les catalyseurs (C).

Il est également possible de mélanger les huiles (A) et les réticulants (B) et d'ajouter ultérieurement, aux produits de réaction homogènes de ces 2 constituants (A) et (B), les charges (D) et les catalyseurs (C). Au cours de ces opérations, les mélanges peuvent être chauffés à une température comprise dans l'intervalle 50-180 °C, sous la pression atmosphérique ou sous une pression réduite afin de favoriser le départ de matières volatiles telles que de l'eau, des polymères de bas poids moléculaire, des acides organiques et des oximes.

Les compositions ainsi préparées peuvent être utilisées telles quelles ou sous la forme de dispersions dans des diluants organiques. Ces diluants sont, de préférence, des produits usuels commercialisés, choisis parmi:
- les hydrocarbures aliphatiques, cycloaliphatiques, aromatiques, halogénés ou non, tels que le n-heptane, le n-octane, le cyclohexane, le méthylcyclohexane, le toluène, le xylène, le me- sitylène, le cumène, la tétraline, le perchloroéthy- lène, le trichloroéthane, le tétrachloroéthane, le chlorobenzène, l'orthodichlorobenzène.
- les cétones aliphatiques et cycloaliphatiques tels que la méthyléthylcétone, la méthylisocutyl- cétone, la cyclohexanone, l'isophorone.
- les esters tels que l'acétate d'éthyle, l'acétate de butyle, l'acétate d'éthylglycol.

Les quantités de diluants introduites doivent être suffisantes pour obtenir des dispersions stables s'étalant facilement sur les substrats. Ces quantités dépendent essentiellement de la nature et de la viscosité des compositions organopolysiloxaniques de départ. Elles peuvent donc varier dans de larges proportions; néanmoins il est recommandé de fabriquer des dispersions contenant de 15 à 85% en poids de diluants.

Les compositions conformes à l'invention, utilisées telles quelles ou sous forme de dispersions sont stables au stockage en l'absence d'eau et durcissent dès la température ambiante (après départ des solvants dans le cas des dispersions) en présence d'eau pour former des élastomères.

Après le dépôt des compositions utilisées telles quelles, sur des substrats solides, en atmosphère humide, on constate que leur durcissement en élastomères, s'effectue de l'extérieur à l'intérieur de la masse déposée. Il se forme d'abord en surface une peau puis la réticulation se poursuit en profondeur. La formation complète de la peau, qui se traduit par un toucher non collant de la surface, demande une période de temps pouvant être comprise dans l'intervalle allant de 1 minute à 55 minutes; cette période dépend du taux d'humidité relative de l'atmosphère entourant les compositions et de la faculté de réticulation de celles-ci.

Par ailleurs le durcissement en profondeur des couches déposées qui doit être suffisant pour permettre le démoulage et la manipulation des élastomères formés, nécessite une période de temps plus longue. En effet, cette prériode dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Cette période de temps plus longue peut se situer entre 10 minutes et 15 heures.

Les compositions peuvent adhérer une fois durcies en élastomères à n'importe quel substrat sans le dépôt préalable d'un agent d'ancrage; plus précisément l'adhérence est particulièrement efficace sur des substrats en verre ou des substrats d'une nature quelconque recouverts de couches de peintures lorsque les compositions mises en oeuvre renferment des agents réticulants acides de formule (Fₗ).

Néanmoins si les substrats recouverts des élas- tomeres (à l'exception des couples substrats- élastomères venant d'être précisés) sont soumis à des contraintes thermiques, mécaniques ou autres, importantes il est recommandé d'appliquer un agent d'ancrage (ou primaire) qui est le plus souvent constitué d'une solution de composés organosiliciques et/ou titaniques (brevets français 1 199 509 et 1 208 255).

Les compositions peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les dispersions précitées de ces compositions dans des diluants sont plus spécialement utilisables pour l'imprégnation en couches minces d'articles tissés ou non-tissés, l'enduction de feuilles en métal ou en matière plastique ou cellulosique; toutefois elles peuvent être projetées, par exemple par pulvérisation à l'aide d'un pistolet à peintures, sur n'importe quels substrats, pour lesquels il est nécessaire d'obtenir un revêtement d'épaisseur de l'ordre de 5 à 300 pm. Après la projection des dispersions, les diluants s'évaporent et les compositions libérées durcissent en un film caoutchouteux parfaitement uniforme.

Le temps de durcissement se situe habituellement entre 5 minutes et plusieurs heures ne dépassant pas 10 heures; cette durée dépend des facteurs déjà cités à propos de la durée de durcissement des compositions déposées en couches plus épaisses et également de la rapidité avec laquelle les diluants s'évaporent. Cette technique de dépôt par pulvérisation est très pratique pour enduire d'un film mince de très grande surface et plus spécialement les coques de navires. Le dépôt d'un film silicone antiadhérent sur les surfaces des bateaux en contact avec l'eau de mer évite l'encrassement de ces surfaces dû à la fixation et au développement d'organismes marins tels que les algues, bernacles, huitres, ascidies; cette application figure par exemple dans le brevet américain 3 702 778.

Cependant la présence d'un film d'elastomère silicone, issu du durcissement des compositions de l'invention sur les coques de navires présente, outre l'avantage d'être antiadhérent vis-à-vis des organismes marins, celui de ne pas libérer, au cours de son lessivage par l'eau de mer, de constituants toxiques, en particulier de sels d'organo- étain d'acides carboxyliques.

Par ailleurs, ce film d'élastomère peut servir comme revêtement antiadhérent inerte, non toxique, de divers substrats en contact avec des produits alimentaires tels que (1) des papiers d'emballage pour confiserie, ou viandes congelées, (2) des bacs métalliques utilisables pour la préparation de glaces et sorbets et (3) des filets métalliques dans lesquels on dépose et moule la pâte à pain et que l'on introduit avec leur contenu dans les fours pour la cuisson du pain. Il peut être employé également, comme revêtement antiadhérent et non toxique de matériaux en contact avec le corps humain tels que compresses, pansements spéciaux pour brûlures.

Les exemples suivants illustrent l'invention:
Préparation de dérivés du titane

### 1. Triméthylsiloxytitane de formule

### Ti[OSi(CH₃)₃]₄

On place 1 mole de titanate d'isopropyle de formule Ti[OCH(CH₃)₂]₄ et 400 cm³ de méthylcyclohexane dans un réacteur et chauffe l'ensemble à l'ébullition. On coule dans ce mélange, progressivement sur une période de 4 heures, 4 moles de triméthylacétoxysilane de formule (CH₃)gSiO-COCH₃. Pendant cette addition on élimine du milieu réactionnel, par chauffage approprié, de l'acétate d'isopropyle au fur et à mesure de sa formation; ce composé distille en mélange avec le méthylcyclohexane.

La synthèse de l'acétate d'isopropyle suit le schéma réactionnel ci-après:
Ti[OCH (CH₃)₂]₄ +4(CH₃)₃SiOCOCH₃→
Ti[OSi(CH₃)₃]₄ +4CH₃COOCH(CH₃)₂

Après la fin de la formation de l'acétate d'iso- propyle, le produit résiduel est rectifié. On récupère le composé de formule précitée Ti[OSi(CH₃)₃]₄ distillant à 78 °C sous 14 Pa.

### 2. Triméthylsiloxytitane de formule

### [CH₃(CH₂)₃O]₂Ti[OSi(CH₃)₃]₂

On utilise la technique précédente, ainsi on place dans un réacteur 1 mole de titanate de n-butyle et 400 cm³ de méthylcyclohexane et porte l'ensemble à l'ébullition. On coule dans ce mélange, progressivement sur une période de 4 heures, 2 moles de triméthylacétoxysilane, et élimine du milieu réactionnel de l'acétate de n-butyle au fur et à mesure de sa formation.

La synthèse de l'acétate de n-butyle suit le schéma réactionnel ci-après:
Ti[O(CH₂)₃CH₃]₄ +2 (CH₃)₃SIOCOCH₃→
→(CH₃(CH₂)₃OTi[OSi(CH₃)₃]₂ +
2CH₃COO(CH₂)₃CH₃

Après la fin de la formation de l'acétate de n-butyle, le produit résiduel est rectifié. On récupère le composé de formule donnée ci-avant:
[CH₃(CH₂)₃O]₂Ti[OSi(CH₃)₃]₂ distillant à 75 °C sous 133 Pa.

### 3. Carboxylate de polytitanoxane constitué de motifs de formule:

### -OTi[OCH(CH₃)2]

### [OCOCH(C₂H₅)(CH₂)₃CH₃]-

On introduit dans un réacteur 0, 1 mole de titanate d'isopropyle et 0,2 mole d'acide éthyl-2 hexanoïque. On porte l'ensemble à 90 °C pendant une période de 2 heures; ensuite on élimine les produits volatils en chauffant progressivement le milieu réactionnel sous une pression réduite. On arrête le chauffage lorsque la température atteint 150 °C; à cette température la pression est de l'ordre de 66 Pa.

Les produits volatils renferment de l'isopropa- nol et de l'éthyl-2 hexanoate d'isopropyle. La synthèse de ces produits suit le schéma réactionnel simplifié ci-après:
Ti[OCH(CH₃)₂]₄⁺
2 CH₃(CH₂)₃CH(C₂H₅)COOH→
⁅OTi[OCH(CH₃)₂]
[OCOCH (C₂H₅) (CH₂)₃CH₃]⁆+
+CH₃(CH₂)₃CH(C₂H₅)COOCH(CH₃)₂+
2 (CH₃)₂CHOH

Le produit résiduel est donc un polymère constitué principalement d'une succession de motifs de formule donnée ci-avant:
fOTi[OCH(CH₃)₂]
[OCOCH (C₂H₅) (CH₂)₃CH₃]⁆

### 4. Carboxylate de polytitanoxane constitué de motifs de formule:

### fOTi[OCOCH (C₂H₅) (CH₂)₃CH₃]2⁆

Le mode opératoire est analogue à celui décrit sous (3).

On introduit dans un réacteur 0,1 mole de titanate d'isopropyle et 0,3 mole d'acide éthyl-2 hexanoïque. On porte l'ensemble vers 90 °C pendant 2 heures puis élimine les produits volatils par chauffage progressif sous pression réduite. On arrête lorsque la température du milieu réactionnel atteint 155 °C; à cette température la pression est de l'ordre de 40 Pa. Les produits volatils renferment de l'éthyl-2 hexanoate d'isopropyle et de l'i-sopropanol. Leur synthèse suit le schéma réactionnel simplifié ci-après:
Ti[OCH(CH₃)₂]₄ +
3CH₃(CH₂)₃CH(C₂H₅)COOH→
⁅OTi[OCOCH(C₂H₅)(CH₂)3CH3]2⁆+·
+CH₃(CH₂)₃CH(C₂H₅)COOCH(CH₃)₂ + 3(CH₃)₂CHOH

Le produit résiduel est donc un copolymère constitué principalement d'une succession de motifs de formule donée ci-avant:
⁅OTi[OCOCH(C₂H₅)(CH₂)₃CH₃]⁆

### 5. Carboxylate de titane de formule:

### (CH₃)₂CHOTi [OCOCH (C₂H₅) (CH₂)₃CH₃]₃

On introduit dans un réacteur 0,2 mole de titanate d'isopropyle, porte ce composé à 110 °C et ajoute progressivement dans le réacteur pendant une période de 2 heures, 0,6 mole de l'acide éthyl-2 hexanoïque. Au cours de cette addition de l'alcool isopropylique distille au fur et à mesure de sa formation.

Le résidu se compose principalement du carboxylate de titane de formule
(CH₃)₂CHOTi[OCOCH (C₂H₅) (CH₂)₃CH₃]₃

### 6. Carboxylate de titane de formule:

### (CH₃)₂CHOTi (OCOC₁₇H₃₅)₃

On opère selon le mode opératoire décrit sous (5) mais remplace 0,6 mole de l'acide éthyl-2 hexanoïque par 0,6 mole de l'acide isostéarique. Après départ de l'alcool isopropylique engendré, il reste principalement le carboxylate de titane de formule:
(CH₃)₂CHOTi(OCOCi₇H₃₅)₃

### 7. Chélate de titane de formule

### [CH₃(CH₂)₃O]₂Ti[OC(CH₃) =CHCOCH₃]₂

On introduit dans un réacteur 0,2 mole de titanate de n-butyle puis 0,4 mole d'acétylacétone, et agite l'ensemble pendant 30 minutes. Le contenu du réacteur est alors chauffé progressivement jusqu'à 80 °C sous pression réduite; à cette température la pression est d'environ 2000 Pa.

Pendant ce chauffage du n-butanol est éliminé. Le produit résiduel est constitué du chélate de formule

### [CH₃(CH₂)₃O⁆₂Ti[OC(CH₃) =CH-COCH₃]₂

Préparation des compositions organopolysiloxaniques

### Exemple 1

On introduit dans un malaxeur:
- 88 parties d'une huile α―ω dihydroxydi- méthylpolysiloxanique de viscosité 3500 mPa·s à 25 °C
- 20 parties d'une silice de combustion de surface spécifique 200 m^{z}/g traitée par de l'octa- méthylcyclotétrasiloxane
- 20 parties de quartz broyé de diamètre particulaire moyen 5 µm
- 0,65 partie d'oxyde de titane de combustion de surface spécifique 50 m^{z}/g

Le contenu de malaxeur est brassé pendant 2 heures à une température de 140 °C sous une pression de 2600 Pa.

Dans le mélange refroidi vers 50-60 °C sont introduites 0,65 partie d'un noir de fumée de surface spécifique 260 m^{z}/g et 6 parties de méthyltriacétoxysilane; le noir de fumée est utilisé sous forme d'un empâtage à 5% dans l'huile α―ω dihy- droxydimethylpolysiloxanique précitée, de viscosité 3500 mPa·s à 25 °C.

Le contenu du malaxeur est brassé pendant 1 h 30; on y ajoute ensuite 0,02 partie de titanate de n-butyle et 80 parties de cyclohexane; l'ensemble est brassé pendant 1 h 30 mn. La dispersion homogène obtenue est filtrée puis placée dans un récipient étanche à l'humidité; elle présente une viscosité de l'ordre de 5000 mPa·s à 25 °C.

Après 6 mois de stockage on ne constate pas de variation significative de la viscosité de la dispersion. On dilue cette dispersion avec du cyclohexane de manière à obtenir une nouvelle dispersion ayant 50% d'extrait sec; cette nouvelle dispersion, de viscosité sensiblement 500 mPa·s à 25 °C, est placée dans le réservoir d'un pistolet à peinture puis projetée par pulvérisation sur une feuille d'aluminium dégraissée.

Une heure après la fin de la projection de la dispersion, on obtient un revêtement complètement durci, uniforme, d'épaisseur environ 100 pm.

On reproduit l'essai précédent en suivant le même processus opératoire et utilisant les mêmes constituants sauf qu'on remplace le titanate de n-butyle par du dilaurate de dibutylétain. On constate que pour obtenir un revêtement d'épaisseur 100 µm, complètement durci en 1 heure, il faut utiliser 0,05 partie de ce sel d'étain.

### Exemple 2

On introduit dans un malaxeur:
- 100 parties d'une huile α―ω-dihydroxydi- méthylpolysiloxanique de viscosité 80 000 mPa-s à 25 °C,
- 16 parties d'une huile méthylpolysiloxanique de viscosité 60 mPa·s à 25 °C, ayant 0,9% de groupes hydroxyles liés aux atomes de silicium, cons- _{tituée} de motifs _{(CH3)3SiOO},₅, _{(CH3})_{2S}iO et CH₃SiO_{1,5} réparties de manière à conduire à un rapport (CH₃)₃SiO_{O},_{5/}(CH₃)₂SiO de 0,04 et à un rapport CH3SiOl,5/(CH3)2SiO de 0,4
- 14 parties d'une silice de combustion de surface spécifique 200 m²/g traitée par de l'octa- méthylcyclotétrasiloxane.

L'ensemble est brassé à 150 °C pendant 2 heures; au cours de cette opération un courant d'azote anhydre balaie l'atmosphère du malaxeur.

Après refroidissement vers 60 °C du contenu du malaxeur, 6 parties de méthyltriacétoxysilane et x parties d'un catalyseur de durcissement sont introduites dans le malaxeur. L'ensemble est brassé pendant 1 heure. La composition auto-vulcanisable obtenue est ensuite placée dans des récipients métalliques étanches à l'air. Pour déterminer la faculté de cette composition de durcir rapidement à l'air ambiant en un élastomère, on l'étale à l'aide d'une râcle en une couche de 1,5 mm d'épaisseur sur une feuille en polyéthylène préalablement traitée par un agent tensioactif anionique commercial; cet agent est constitué du sel de sodium d'un sulfate d'alcoyle dont le groupe alcoyle est ramifié et possède au moins 12 atomes de carbone.

On note la période de temps au bout de laquelle la surface de la couche déposée est non collante. Cette mesure est effectuée avec une baguette en bois que l'on met en contact par l'une de ses 2 extrémités, avec la surface de la couche déposée; on examine si une adhérence significative existe entre la baguette et la couche. Cette mesure sera appelée temps non collant. On note également au bout de quelle période de temps la couche déposée s'est transformée en un film caoutchouteux suffisamment cohérent et tenace pour pouvoir être enlevé sans se déchirer de la feuille en polyéthylène. Cette mesure sera appelée temps de démoulage du film.

Le tableau ci-après rassemble les valeurs des temps non collants et de démoulage de film issus de la composition ci-dessus dans laquelle on utilise successivement des catalyseurs de durcissement constitués de dérivés du titane et du zirconium et, à titre comparatif, de dérivés de l'étain. La nature de ces catalyseurs et la quantité x utilisée, sont également indiquées dans le tableau ci-après:

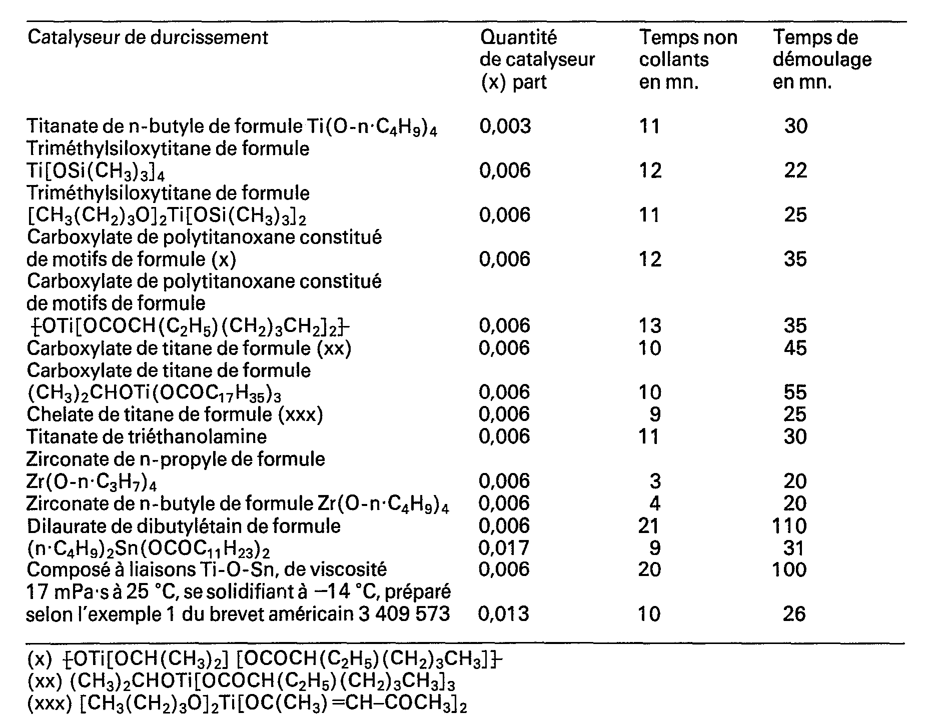

Les 2 derniers composés du tableau sont employés à titre comparatif.

Les valeurs rassemblées dans ce tableau montrent que les dérivés du titane et du zirconium, caractérisant les compositions de la présente invention, peuvent aisément remplacer et à des doses au moins 2 fois plus faibles les dérivés de l'étain, ou à liaisons Ti-O-Sn, utilisés antérieurement.

### Exemple 3

On introduit dans un malaxeur:
- 100 parties d'une huile α―ω-dihydroxydi- méthylpolysiloxanique de viscosité 18 000 mPa_{'}s à 25 °C,
- 18 parties d'une gomme a-w bis(triméthylsi- loxy)diméthylpolysiloxanique de viscosité 40 000 mPa-s à 25 °C
- 6 parties d'une huile α―ω-dihydroxyméthyl- phénylpolysiloxanique de viscosité 350 mPa·s à 25 °C
- 12 parties de silice de combustion de surface spécifique 200 ₘ²/g
- 12 parties de lithopone de diamètre particulaire moyen de l'ordre de 1 pm.

L'ensemble est brassé pendant 4 heures à 150 °C; pendant cette opération l'atmosphère du malaxeur est balayé par un courant d'azote sec.

Après refroidissement du mélange vers 50 °C on introduit dans le malaxeur, 8,5 parties du réticulant de formule:
CH₂=CHSi [ON =C(C₂H₅)CH₃]₃

et 0,01 partie du titanate de n-butyle. L'ensemble est malaxé pendant 2 heures. La composition autovulcanisable obtenue est placée dans des récipients en aluminium étanches à l'humidité.

On procède, pour déterminer la faculté de durcissement à l'air ambiant de cette composition, selon le mode opératoire décrit à l'exemple 2. Ainsi on prépare des films d'épaisseur 1,5 mm et mesure les temps non collants et de démoulage. On trouve un temps non collant de 35 minutes et un temps de démoulage de 5 heures.

On reproduit le même essai excepté qu'on remplace le titanate de n-butyle par du diacétate de di(n.butyl)étain. On constate que pour obtenir les valeurs ci-avant du temps non collant et du temps de démoulage, il faut employer au moins 0,04 partie de ce sel d'étain.

## Revendications (Revendications pour l'(les) Etat(s) contractant(s) suivant(s) : BE, CH, DE, FR, GB, IT, LI, NL, SE)

1. Compositions organopolysiloxaniques monocomposantes, stables au stockage en l'absence d'eau, durcissant en élastomères dès la température ambiante en présence d'eau, formées par mélange des constituants suivants:
A) 100 parties d'un polysiloxane essentiellement constitué par un polymère α―ω-dihydroxy- diorganopolysiloxanique de viscosité 700 à 1 000 000 mPa·s à 25 °C, constitué d'une succession de motifs diorganosiloxy de formule R₂SiO dans laquelle les symboles R, identiques ou différents, représentent des radicaux hydrocarbonés ayant de 1 à 8 atomes de carbone, substitués ou non par des atomes d'halogènes, des groupes cyano
B) 2 à 25 parties d'un agent réticulant de formule
RₐSi(OCOR¹)₄₋ₐ ou de formule
Rₐ,Si(ON =CR₂²)₄₋ₐ,
dans lesquelles les symboles R ont la signification donnée sous A), le symbole R¹, représente un radical hydrocarboné exempt d'insaturation aliphatique, ayant de 1 à 15 atomes de carbone, les symboles R², identiques du différents, représentent des radicaux alcoyles ayant de 1 à 8 atomes de carbone et les symboles a et a' représentent zéro ou un
C) 0,0004 à 0,095 partie d'un catalyseur de durcissement
D) 5 à 150 parties de charge minérales caractérisées en ce que le catalyseur de durcissement C) est soit un dérivé organique de titane, soit un dérivé organique du zirconium, choisis parmi les composés suivants:
(i) le dérivé organique du titane:
- les composés appelés (Ci) qui portent par atome de titane au moins un radical organosilicique lié à cet atome de titane par une liaison Ti-0-Si, les autres valences éventuellement restantes de l'atome de titane étant satisfaites par des radicaux situés dans le groupe comprenant des radicaux organiques liés à l'atome de titane par des liaisons Ti-O-C, des radicaux hydroxyles, des atomes d'oxygène des liaisons Ti-O-Ti et le cas échéant des liaisons de chélation,
- les composés appelés (C₂) qui portent par atome de titane au moins un radical organique lié à cet atome par une liaison Ti-O-C, les autres valences éventuellement restantes de l'atome de titane étant satisfaites par des radicaux situés dans le groupe comprenant des radicaux hydroxyles, des atomes d'oxygène des liaisons Ti-O-Ti, et le cas échéant des liaisons de chélation
(2i) le dérivé organique du zirconium:
- les composés qui portent par atome de zirconium au moins un radical organique lié à cet atome de zirconium par une liaison Zr-O-C mais il n'y a pas de liaisons Zr-OCO- provenant d'un reste d'acide carboxylique, les autres valences éventuellement restantes de l'atome de zirconium étant satisfaites par des radicaux situés dans le groupe comprenant des radicaux hydroxyles, des atomes d'oxygène des liaisons Zr-O-Zr, et le cas échéant des liaisons de chélation.

2. Compositions selon la revendication 1 caractérisées en ce que les dérivés du titane (C₁) répondent à la formule générale:
(G₃-SiO)₄₋ₓTi(G')ₓ dans laquelle
- les symboles G, identiques ou différents représentent des radicaux hydrocarbonés ayant de 1 à 8 atomes de carbone, des radicaux alcoxyles ayant de 1 à 4 atomes de carbone, des radicaux β-méthoxyéthoxyles,
- les symboles G', représentent des radicaux situés dans le groupe formé de ceux de formules:
-(OCH₂CH₂)_{b}OR⁴,
-OC(Q') =C(R5)COQ,
deux radicaux G' peuvent ensemble constituer le radical divalent de formule: 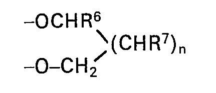 Ce radical divalent étant rattaché par ses 2 valences à l'atome de titane.
Dans ces 3 formules:
- le symbole R⁴ représente un radical alcoyle ayant de 1 à 12 atomes de carbone,
- le symbole b représente zéro ou un; quand le symbole b représente zéro, le radical alcoyle R⁴ a de 2 à 12 atomes de carbone, et quand le symbole b représente 1, le radical alcoyle a de 1 à 3 atomes de carbone,
- le symbole Q représente un atome d'hydrogène, un radical alcoyle ayant de 1 à 4 atomes de carbone, un radical phényle, un radical alcoxyle ayant de 1 à 5 atomes de carbone, un radical dialcoylamino dont les groupes alcoyles liés à l'atome d'azote ont de 1 à 4 atomes de carbone,
- le symbole R⁵ représente un atome d'hydrogène, un radical méthyle, un radical chloro- méthyle, un radical acétyle,
- le symbole Q' représente un radical alcoyle ayant de 1 à 5 atomes de carbone, un radical chlo- rométhyle,
- les symboles R⁶ et R⁷, identiques ou différents, représentent des atomes d'hydrogène, des radicaux méthyles
- le symbole n représente zéro, 1 ou 2
- le symbole x représente zéro, un, deux ou trois.

3. Compositions selon la revendication 1 caractérisées en ce que les dérivés du titane (C₂) répondent à la formule générale:
(G')yTi(OCOR⁸)4-y dans laquelle:
- les symboles G' ont la même signification que celle des symboles G' décrits dans la revendication 2
- le symbole y représente un nombre entier ou fractionnaire allant de zéro à quatre
- le symbole R⁸ représente un radical hydrocarboné ayant de 1 à 20 atomes de carbone.

4. Compositions selon la revendication 1 caractérisées en ce que les dérivés du titane (C₂) sont des polytitanoxanes formés d'une succession de motifs de formule:
-Ti(OCOR⁸)y,[(OCH₂CH₂)_{b}OR⁴]_{2-y},O-
dans laquelle les symboles R⁸, R⁴ et b ont la même signification que celle des symboles R⁸, R⁴ et b décrits dans les revendications 2 et 3 et le symbole y' représente 1 ou 2.

5. Compositions selon la revendication 1 caractérisées en ce que les dérivés du titane (C₂) sont des titanates d'alcanolamines.

6. Compositions selon les revendications 1 et 2 caractérisées en ce que les dérivés du titane (C₁) sont des produits d'hydrolyse partielle des composés de formule (G₃SiO)_{4-y}Ti(G')ₓ décrits à la revendication 2.

7. Compositions selon les revendications 1 et 3 caractérisées en ce que les dérivés du titane (C₂) sont des produits d'hydrolyse partielle des composés de formule (G')yTi(OCOR⁸)_{4-y} décrite à la revendication 3.

8. Compositions selon la revendication 1 caractérisées en ce que les dérivés organiques dfzirco- nium (C) répondent à la formule:
Zr[(OCH₂CH₂)_{b}OR⁴J₄
dans laquelle les symboles R⁴ et b ont la même signification que celle des symboles R⁴ et b décrits à la revendication 2.

9. Compositions selon les revendications 1 et 8 caractérisées en ce que les dérivés organiques du zirconium (C) sont des produits d'hydrolyse partielle des composés de formule:
Zr[(OCH₂CH_{z})_{b}OR⁴]₄
décrite à la revendication 8.

## Revendications (Revendications pour l'(les) Etat(s) contractant(s) suivant(s) : AT)

1. Procédé de préparation d'une composition organopolysiloxanique monocomposante stable au stockage en l'absence d'eau durcissant en élastomère dès la température ambiante en présence d'eau, caractérisé en ce qu'on brasse intimement à l'abri de l'humidité, avec ou sans apport de chaleur, les constituants suivants:
A) 100 parties d'un polysiloxane essentiellement constitué par un polymère a-o-dihydroxy- diorganopolysiloxanique de viscosité 700 à 1 000 000 mPa·s à 25 °C, constitué d'une succession de motifs diorganosiloxy de formule R₂SiO dans laquelle les symboles R, identiques ou différents, représentent des radicaux hydrocarbonés ayant de 1 à 8 atomes de carbone, substitués ou non par des atomes d'halogènes, des groupes cyano
B) 2 à 25 parties d'un agent réticulant de formule RₐSi(OCOR₁)₄₋ₐ ou de formule Rₑ, Si (ON=CR² ₂)₄₋ₐ, dans lesquelles les symboles R ont la signification donnée sous A), le symbole R¹, représente un radical hydrocarboné exempt d'insaturation aliphatique, ayant de 1 à 15 atomes de carbone, les symboles R², identiques ou différents, représentent des radicaux alcoyles ayant de 1 à 8 atomes de carbone et les symboles a et a' représentent zéro ou un
C) 0,0004 à 0,095 partie d'un catalyseur de durcissement qui est soit un dérivé organique du titane, soit un dérivé organique du zirconium, choisis parmi les composés suivants:
(i) le dérivé organique du titane:
- les composés appelés (Ci) qui portent par atome de titane au moins un radical organosilicique lié à cet atome de titane par une liaison Ti-0-Si, les autres valences éventuellement restantes de l'atome de titane étant satisfaites par des radicaux situés dans le groupe comprenant des radicaux organiques liés à l'atome de titane par des liaisons Ti-O-C, des radicaux hydroxyles, des atomes d'oxygène des liaisons Ti-O-Ti et le cas échéant des liaisons de chélation,
- les composés appelés (C₂) qui portent par atome de titane au moins un radical organique lié à cet atome par une liaison Ti-O-C, les autres valences éventuellement restantes de l'atome de titane étant satisfaites par des radicaux situés dans le groupe comprenant des radicaux hydroxyles, des atomes d'oxygène des liaisons Ti-O-Ti, et le cas échéant des liaisons de chélation
(2i) le dérivé organique du zirconium:
- les composés qui portent par atome de zirconium au moins un radical organique lié à cet atome de zirconium par une liaison Zr-O-C mais il n'y a pas de liaisons Zr-OCO- provenant d'un reste d'acide carboxylique, les autres valences éventuellement restantes de l'atome de zirconium étant satisfaites par des radicaux situés dans le groupe comprenant des radicaux hydroxyles, des atomes d'oxygène des liaisons Zr-O-Zr, et le cas échéant des liaisons de chélation.
D) 5 à 150 parties de charges minérales.

2. Procédé de préparation d'une composition organopolysiloxanique monocomposante, stable au stockage en l'absence d'eau durcissant en élastomères dès la température ambiante en présence d'eau, caractérisé en ce que:
a) on mélange intimement à une température comprise entre 80 et -180 °C dans un malaxeur en l'absence d'humidité:
A) 100 parties d'un polysiloxane essentiellement constitué par un polymère α―ω-dihydroxy- diorganopolysiloxanique de viscosité 700 à 1 000 000 mPa-s à 25 °C, constitué d'une succession de motifs diorganosiloxy de formule R₂SiO dans laquelle les symboles R, identiques ou différents, représentent des radicaux hydrocarbonés ayant de 1 à 8 atomes de carbone, substitués ou non par des atomes d'halogènes, des groupes cyano et,
D) 5 à 150 parties de charges minérales.
b) on refroidit à une température inférieure à 60 °C
c) on ajoute alors en mélangeant:
B) 2 à 25 parties d'un agent réticulant de formule RₐSi(OCOR¹)₄₋ₐ ou de formule Rₐ, Si (ON=CR2 ₂)₄-, dans lesquelles les symboles R ont la signification donnée sous A), le symbole R¹, représente un radical hydrocarboné exempt d'insaturation aliphatique, ayant de 1 à 15 atomes de carbone, les symboles R², identiques ou différents, représentent des radicaux alcoyles ayant de 1 à 8 atomes de carbone et les symboles a et a' représentent zéro ou u n
C) soit un dérivé organique du titane, soit un dérivé organique du zirconium choisis parmi les composés suivants:
(i) le dérivé organique du titane:
- les composés appelés (Cₗ) qui portent par atome de titane au moins un radical organosilicique lié à cet atome de titane par une liaison Ti-O-Si, les autres valences éventuellement restantes de l'atome de titane étant satisfaites par des radicaux situés dans le groupe comprenant des radicaux organiques liés à l'atome de titane par des liaisons Ti-O-C, des radicaux hydroxyles, des atomes d'oxygène des liaisons Ti-O-Ti et le cas échéant des liaisons de chélation,
- les composés appelés (C₂) qui portent par atome de titane au moins un radical organique lié à cet atome par une liaison Ti-O-C, les autres valences éventuellement restantes de l'atome de titane étant satisfaites par des radicaux situés dans le groupe comprenant des radicaux hydroxyles, des atomes d'oxygène des liaisons Ti-O-Ti, et le cas échéant des liaisons de chélation
(2i) le dérivé organique du zirconium:
- les composés qui portent par atome de zirconium au moins un radical organique lié à cet atome de zirconium par une liaison Zr-O-C mais il n'y a pas de liaisons Zr-OCO- provenant d'un reste d'acide carboxylique, les autres valences éventuellement restantes de l'atome de zirconium étant satisfaites par des radicaux situés dans le groupe comprenant des radicaux hydroxyles, des atomes d'oxygène des liaisons Zr-O-Zr, et le cas échéant des liaisons de chélation.

3. Procédé selon la revendication 1 ou 2, caractérisé en ce que l'étappe a) s'effectue sous une pression comprise entre 500 et 10⁴ Pa.

4. Procédé selon une quelconque des précédentes revendications, caractérisé en ce que les dérivés du titane (C₁) répondent à la formule générale:
(G₃SiO)₄₋ₓTi(G')ₓ dans laquelle
- les symboles G, identiques ou différents représentent des radicaux hydrocarbonés ayant de 1 à 8 atomes de carbone, des radicaux alcoyles ayant de 1 à 4 atomes de carbone, des radicaux β-méthoxyéthoxyles,
- les symboles G', représentent des radicaux situés dans le groupe formé de ceux de formules:
-(OCH₂CH₂)_{b}OR⁴,
-OC(Q') =C(R⁵) COQ,
deux radicaux G' peuvent ensemble constituer le radical divalent de formule: 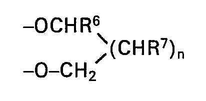 Ce radical divalent étant rattaché par ses 2 valences à l'atome de titane.
Dans ces 3 formules:
- le symbole R⁴ représente un radical alcoyle ayant de 1 à 12 atomes de carbone,
- le symbole b représente zéro ou un; quand le symbole b représente zéro, le radical alcoyle R⁴ a de 2 à 12 atomes de carbone, et quand le symbole b représente 1, le radical alcoyle a de 1 à 3 atomes de carbone,
- le symbole Q représente un atome d'hydrogène, un radical alcoyle ayant de 1 à 4 atomes de carbone, un radical phényle, un radical alcoxyle ayant de 1 à 5 atomes de carbone, un radical dialcoylamino dont les groupes alcoyles liés à l'atome d'azote ont de 1 à 4 atomes de carbone,
- le symbole R⁵ représente un atome d'hydrogène, un radical méthyle, un radical chloro- méthyle, un radical acétyle,
- le symbole Q' représente un radical alcoyle ayant de 1 à 5 atomes de carbone, un radical chlo- rométhyle
- les symboles R⁶ et R⁷, identiques ou différents, représentent des atomes d'hydrogène, des radicaux méthyles
- le symbole n représente zéro, 1 ou 2
- le symbole x représente zéro, un, deux ou trois.

5. Procédé selon une quelconque des revendications 1 à 3 caractérisé en ce que les dérivés du titane (C₂) répondent à la formule générale:
(G'),Ti(OCOR⁸)_{4-y} dans laquelle:
- les symboles G' ont la même signification que celle des symboles G' décrits dans la revendication 4
- le symbole y représente un nombre entier ou fractionnaire allant de zéro à quatre
- le symbole R représente un radical hydrocarboné ayant de 1 à 20 atomes de carbone.

6. Procédé selon l'une quelconque des revendications 1 à 3 caractérisé en ce que les dérivés du titane (C₂) sont des polytitanoxanes formés d'une succession de motifs de formule:
-Ti(OCOR⁸)y, [(OCH₂CH₂)_{b}OR⁴]_{2-y},O-
dans laquelle les symboles R⁸, R⁴ et b ont la même signification que celle des symboles R⁸, R⁴ et b décrits dans les revendications 4 et 5 et le symbole y' représente 1 ou 2.

7. Compositions selon l'une quelconque des revendications 1 à 3 caractérisées en ce que les dérivés du titane (C₂) sont des titanates d'alcanolamines.

8. Compositions selon l'une quelconque des revendications 1 à 4 caractérisées en ce que les dérivés du titane (Ci) sont des produits d'hydrolyse partielle des composés de formule (G₃SiO)_{4-y}Ti(G')x décrite à la revendication 4.

9. Compositions selon l'une quelconque des revendications 1 à 3 et 5 caractérisées en ce que les dérivés du titane (C₂) sont des produits d'hydrolyse partielle des composés de formule (G')_{y}Ti(OCOR⁸)_{4-y} décrite à la revendication 5.

10. Compositions selon l'une quelconque des revendications 1 à 3 caractérisées en ce que les dérivés organiques du zirconium (C) répondent à la formule:
Zr[(OCH₂CH₂)_{b}OR⁴]₄
dans laquelle les symboles R⁴ et b ont la même signification que celle des symboles R⁴ et b décrits à la revendication 4.

11. Compositions selon les revendications 1 et 10 caractérisées en ce que les dérivés organiques du zirconium (C) sont des produits d'hydrolyse partielle des composés de formule:
Zr[(OCH₂CH₂)_{b}OR⁴J₄
décrite à la revendication 10.

## Patentansprüche (Patentansprüche für folgende(n) Vertragsstaat(en) : BE, CH, DE, FR, GB, IT, LI, NL, SE)

1. Organopolysiloxan-Einkomponenten-Zusammensetzungen, die bei der Lagerung in Abwesenheit von Wasser stabil sind und in Gegenwart von Wasser ab Umgebungstemperatur zu Elastomeren härten, gebildet durch Mischen der folgenden Bestandteile:
(A) 100 Teile eines Polysiloxans, das im wesentlichen aus einem α―ω-Dihydroxydiorganopolysiloxan-Polymeren der Viskosität 700 bis 1 000 000 mPa·s bei 25 °C besteht, bestehend aus einer Folge von Diorganosiloxy-Gruppierungen der Formel R₂SiO, worin die Symbole R, die identisch oder verschieden sind, Kohlenwasserstoffreste mit 1 bis 8 Kohlenstoffatomen, die substituiert oder nichtsubstituiert durch Halogenatome oder Cyanogruppen sind, bedeuten.
(B) 2 bis 25 Teile eines Vernetzungsmittels der Formel RₐSi(OCOR¹)₄₋ₐ oder der Formel Rₐ,Si(ON =CR²₂)_{4-a"} haben, das Symbol R' einen Kohlenwasserstoffrest, frei von aliphatischer Unsättigung, mit 1 bis 15 Kohlenstoffatomen bedeutet, die Symbole R², die identisch oder verschieden sind, Alkylreste mit 1 bis 8 Kohlenstoffatomen bedeuten und die Symbole a und a' Null oder eins bedeuten,
(C) 0,0004 bis 0,095 Teile eines Härtungskatalysators,
(D) 5 bis 150 Teile mineralische Füllstoffe, dadurch gekennzeichnet, dass der Härtungskatalysator (C) entweder ein organisches Derivat des Titans oder ein organisches Derivat des Zirkons ist, ausgewählt unter den folgenden Verbindungen:
(i) das organische Derivat des Titans:
- die mit (Cᵢ) bezeichneten Verbindungen, welche pro Titan-Atom mindestens einen Organosiliciumrest, gebunden an dieses Titan-Atom durch eine Ti-O-Si-Bindung, tragen, wobei die übrigen, gegebenenfalls verbleibenden Wertigkeiten des Titan-Atoms durch Reste abgesättigt sind, die in der Gruppe, umfassend organische Reste, gebunden an das Titan-Atom durch Ti-0-C-Bindungen, Hydroxylreste, Sauerstoffatome der Ti-O- Ti-Bindungen und gegebenenfalls Chelatbindungen, liegen,
- die mit (C₂) bezeichneten Verbindungen, welche pro Titan-Atom mindestens einen organischen Rest, gebunden an dieses Atom durch eine Ti-O-C-Bindung, tragen, wobei die anderen, gegebenenfalls verbleibenden Wertigkeiten des Titan-Atoms durch Reste abgesättigt sind, die in der Gruppe, umfassend Hydroxylreste, Sauerstoffatome der Ti-O-Ti-Bindungen und gegebenenfalls Chelat-Bindungen, liegen,
(2i) das organische Derivat des Zirkons:
- die Verbindungen, welche pro Zirkonium-Atom mindestens einen organischen Rest, gebunden an dieses Zirkonium-Atom durch eine Zr-0-C-Bindung, tragen, jedoch keine Zr-OCO-Bindungen, stammen von einem Carbonsäurerest, wobei die gegebenenfalls verbleibenden Wertigkeiten des Zirkon-Atoms durch Reste abgesättigt sind, die in der Gruppe liegen, welche Hydroxylreste, Sauerstoffatome der Zr-O-Zr-Bindungen und gegebenenfalls Chelat- Bindungen umfasst.

2. Zusammensetzungen gemäss Anspruch 1, dadurch gekennzeichnet, dass die Derivate des Titans (C₁) der allgemeinen Formel
(G₃SiO)₄₋ₓTi(G')ₓ entsprechen, worin
- die Symbole G, die identisch oder verschieden sind, Kohlenwasserstoffreste mit 1 bis 8 Kohlenstoffatomen, Alkoxyreste mit 1 bis 4 Kohlenstoffatomen, ß-Methoxyethoxylreste bedeuten,
- die Symbole G' Reste bedeuten, die in der Gruppe liegen, die von denjenigen der Formeln:
-(OCH₂CH₂)_{b}OR⁴,
-OC(')=C(R⁵)COQ
gebildet ist, wobei zwei Reste G' zusammen den zweiwertigen Rest der Formel 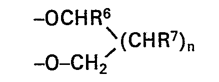 bilden können und dieser zweiwertige Rest durch seine zwei Wertigkeiten an das Titan-Atom gebunden ist. In diesen drei Formeln:
- bedeutet das Symbol R⁴ einen Alkylrest mit 1 bis 12 Kohlenstoffatomen,
- das Symbol b bedeutet Null oder Eins: wenn das Symbol b Null bedeutet, hat der Alkylrest R⁴ 2 bis 12 Kohlenstoffatome, und wenn das Symbol b Eins bedeutet, hat der Alkylrest 1 bis 3 Kohlenstoffatome,
- das Symbol Q bedeutet ein Wasserstoffatom, einen Alkylrest mit 1 bis 4 Kohlenstoffatomen, einen Phenylrest, einen Alkoxyrest mit 1 bis 5 Kohlenstoffatomen, einen Dialkylaminorest, dessen an das Stickstoffatom gebundene Alkylgruppen 1 bis 4 Kohlenstoffatome haben,
- das Symbol R⁵ bedeutet ein Wasserstoffatom, einen Methylrest, einen Chlormethylrest, einen Acetylrest,
- das Symbol Q' bedeutet einen Alkylrest mit 1 bis 5 Kohlenstoffatomen, einen Chlormethylrest,
- die Symbole R⁶ und R⁷, die identisch oder verschieden sind, bedeuten Wasserstoffatome, Methylreste,
- das Symbol n bedeutet Null, 1 oder 2,
- das Symbol x bedeutet Null, Eins, Zwei oder Drei.

3. Zusammensetzungen gemäss Anspruch 1, dadurch gekennzeichnet, dass die Derivate des Titans (C₂) der allgemeinen Formel
(G')_{y}Ti(OCOR⁸)_{4-y} entsprechen, worin
- die Symbole G' die gleiche Bedeutung haben wie die Symbole G', die in Anspruch 2 beschrieben sind,
- das Symbol y eine ganze oder Bruchzahl von Null bis Vier bedeutet,
- das Symbol R⁸ einen Kohlenwasserstoffrest mit 1 bis 20 Kohlenstoffatomen bedeutet.

4. Zusammensetzungen gemäss Anspruch 1, dadurch gekennzeichnet, dass die Derivate des Titans (C₂) Polytitanoxane sind, gebildet aus einer Folge von Gruppierungen der Formel:
-Ti(OCOR⁸)_{y},[(OCH₂CH₂)_{b}OR⁴]_{2-y},O-
worin die Symbole R⁸, R⁴ und b die gleiche Bedeutung wie die Symbole R⁸, R⁴ und b, die in den Ansprüchen 2 und 3 beschrieben sind, haben und das Symbol y' 1 oder 2 bedeuten.

5. Zusammensetzungen gemäss Anspruch 1, dadurch gekennzeichnet, dass die Derivate des Titans (C₂) Alkanolamintitanate sind.

6. Zusammensetzungen gemäss den Ansprüchen 1 und 2, dadurch gekennzeichnet, dass die Derivate des Titans (C₁) Produkte der teilweisen Hydrolyse der Verbindungen der Formel (G₃SiO)_{4-y},(Ti(G')ₓ, die in Anspruch 2 beschrieben ist, sind.

7. Zusammensetzungen nach den Ansprüchen 1 und 3, dadurch gekennzeichnet, dass die Derivate des Titans (C₂) Produkte der teilweisen Hydrolyse der Verbindungen der Formel (G')yTi (OCOR8)4-y, die in Anspruch 3 beschrieben ist, sind.

8. Zusammensetzungen gemäss Anspruch 1, dadurch gekennzeichnet, dass die organischen Derivate des Zirkoniums (C) der Formel
Zr[(OCH₂CH₂)_{b}OR⁴]₄
entsprechen, worin die Symbole R⁴ und b die gleiche Bedeutung haben wie die Symbole R⁴ und b, die in Anspruch 2 beschrieben sind.

9. Zusammensetzungen nach den Ansprüchen 1 und 8, dadurch gekennzeichnet, dass die organischen Derivate des Zirkoniums (C) Produkte der teilweisen Hydrolyse der Formel
Zr[(OCH_{Z}CH₂)_{b}OR⁴]₄,
die in Anspruch 8 beschrieben ist, sind.

## Patentansprüche (Patentansprüche für folgende(n) Vertragsstaat(en) : AT)

1. Verfahren zur Herstellung einer Organopolysiloxan-Einkomponenten-Zusammensetzung, die bei der Lagerung in Abwesenheit von Wasser stabil ist und zu Elastomeren ab Umgebungstemperatur in Anwesenheit von Wasser härtet, dadurch gekennzeichnet, dass man unter Feuchtigkeitsausschluss mit oder ohne Zufuhr von Wärme die folgenden Bestandteile innig durcheinandermischt:
(A) 100 Teile eines Polysiloxans, das im wesentlichen aus einem α―ω-Dihydroxydiorganopolysiloxan-Polymeren der Viskosität 700 bis 1 000 000 mPa-s bei 25 °C besteht, bestehend aus einer Folge von Diorganosiloxy-Gruppierungen der Formel R₂SiO, worin die Symbole R, die identisch oder verschieden sind, Kohlenwasserstoffreste mit 1 bis 8 Kohlenstoffatomen, die substituiert oder nichtsubstituiert durch Halogenatome, Cyanogruppen sind, bedeuten,
(B) 2 bis 25 Teile eines Vernetzungsmittels der Formel
RₐSi(OCOR¹)₄₋ₐ oder der Formel
Rₐ,Si(ON =CR²₂),₄₋ₐ'
worin die Symbole R die unter (A) angegebene Bedeutung haben, das Symbol R¹ einen Kohlenwasserstoffrest, frei von aliphatischer Unsättigung, mit 1 bis 15 Kohlenstoffatomen bedeutet, die Symbole R², die identisch oder verschieden sind, Alkylreste mit 1 bis 8 Kohlenstoffatomen bedeuten und die Symbole a und a' Null oder Eins bedeuten,
(C) 0,0004 bis 0,095 Teile eines Härtungskatalysators, der entweder ein organisches Derivat des Titans oder ein organisches Derivat des Zirkons ist, ausgewählt unter den folgenden Verbindungen:
(i) das organische Derivat des Titans:
- die mit (C₁) bezeichneten Verbindungen, welche pro Titan-Atom mindestens einen Organosiliciumrest, gebunden an dieses Titan-Atom durch eine Ti-O-Si-Bindung, tragen, wobei die übrigen, gegebenenfalls verbleibenden Valenzen des Titan-Atoms durch Reste abgesättigt sind, die in der Gruppe, umfassend organische Reste, gebunden an das Titan-Atom durch Ti-O-C-Bindungen, Hydroxylreste, Sauerstoffatome der Bindungen Ti-O-Ti und gegebenenfalls Chelat-Bindungen, liegen,
- die mit (C₂) bezeichneten Verbindungen, welche pro Titan-Atom mindestens einen organischen Rest, gebunden an dieses Atom durch eine Ti-O-C-Bindung, tragen, wobei die gegebenenfalls verbleibenden, übrigen Wertigkeiten des Titan-Atoms durch Reste abgesättigt sind, die in der Gruppe, umfassend Hydroxylreste, Sauerstoffatome der Ti-O-Ti-Bindungen und gegebenenfalls Chelat- Bindungen, liegen,
(2i) das organische Derivat des Zirkons:
- die Verbindungen, welche pro Zirkon-Atom mindestens einen organischen Rest, gebunden an dieses Zirkon-Atom durch eine Zr-O-C-Bindung, tragen, jedoch nicht Zr-OCO-Bindungen, stammend von einem Carbonsäurerest, sind, wobei die gegebenenfalls verbleibenden Valenzen des Zirkon-Atoms durch Reste abgesättigt sind, die in der Gruppe, umfassend Hydroxylreste, Sauerstoffatome der Zr-O-Zr-Bindungen und gegebenenfalls Chelat- Bindungen, liegen,
(D) 5 bis 150 Teile mineralische Füllstoffe.

2. Verfahren zur Herstellung einer Organopolysiloxan-Einkomponenten-Zusammensetzung, die in Abwesenheit von Wasser lagerbeständig ist und in Gegenwart von Wasser ab Umgebungstemperatur zu Elastomeren härtet, dadurch gekennzeichnet, dass man
(a) bei einer Temperatur zwischen 80 und -180°C in einem Mischer in Abwesenheit von Feuchtigkeit innig vermischt:
(A) 100 Teile eines Polysiloxans, das im wesentlichen aus einem α―ω-Dihydroxydiorganopolysiloxan-Polymeren der Viskosität 700 bis 1 000 000 mPa-s bei 25 °C besteht, bestehend aus einer Folge von Diorganosiloxy-Gruppierungen der Formel P₂SiO, worin die Symbole R, die identisch oder verschieden sind, Kohlenwasserstoffreste mit 1 bis 8 Kohlenstoffatomen bedeuten, die substituiert oder nichtsubstituiert durch Halogenatome, Cyanogruppen sind, und
(D) 5 bis 150 Teile mineralische Füllstoffe,
(b) man kühlt auf eine Temperatur unterhalb 60 °C,
(c) man gibt dann unter Vermischen zu:
(B) 2 bis 25 Teile eines Vernetzungsmittels der Formel RₐSi(OCOR¹)₄₋ₐ oder der Formel Rₐ,Si (ON=CR²₂)_{4-a"} worin die Symbole R die unter (A) angegebene Bedeutung haben, das Symbol R¹ einen Kohlenwasserstoffrest, frei von aliphatischer Unsättigung, mit 1 bis 15 Kohlenstoffatomen bedeutet, die Symbole R², die identisch oder verschieden sind, Alkylreste mit 1 bis 8 Kohlenstoffatomen bedeuten und die Symbole a und a' Null oder Eins bedeuten.
(C) entweder ein organisches Derivat des Titans oder ein organisches Derivat des Zirkons, ausgewählt unter den folgenden Verbindungen:
(i) das organische Derivat des Titans:
- die mit (C₁) bezeichneten Verbindungen, welche pro Titan-Atom wenigstens einen Organosiliciumrest, gebunden an dieses Titan-Atom durch eine Ti-O-Si-Bindung, tragen, wobei die gegebenenfalls verbleibenden, anderen Wertigkeiten des Titan-Atoms durch Reste abgesättigt sind, die in der Gruppe, umfassend organische Reste, gebunden an das Titan-Atom durch Ti-O-C-Bindungen, Hydroxylreste, Sauerstoffatome der Bindungen Ti-O-Ti und gegebenenfalls Chelat-Bindungen, liegen,
- die mit (C₂) bezeichneten Verbindungen, welche pro Titan-Atom wenigstens einen organischen Rest, gebunden an dieses Atom durch eine Ti-O-C-Bindung, tragen, wobei die gegebenenfalls verbleibenden, anderen Wertigkeiten des Titan-Atoms durch Reste abgesättigt sind, die in der Gruppe, umfassend Hydroxylreste, Sauerstoffatome der Bindungen Ti-O-Ti und gegebenenfalls Chelat-Bindungen, liegen,
(2i) das organische Derivat des Zirkons:
- die Verbindungen, welche pro Zirkon-Atom mindestens einen organischen Rest, gebunden an dieses Zirkon-Atom durch eine Zr-O-C-Bindung, jedoch keine Zr-OCO-Bindungen, stammend von einem Carbonsäurerest, tragen, wobei die gegebenenfalls verbleibenden Wertigkeiten des Zirkon-Atoms durch Reste abgesättigt sind, die in der Gruppe, umfassend Hydroxylreste, Sauerstoffatome der Zr-O-Zr-Bindungen und gegebenenfalls Chelat-Bindungen, liegen.

3. Verfahren gemäss Anpruch 1 oder 2, dadurch gekennzeichnet, dass die Stufe (a) unter einem Druck zwischen 500 und 10⁴ Pa durchgeführt wird.

4. Verfahren gemäss einem der vorhergehenden Ansprüche, dadurch gekennzeichnet, dass die Derivate des Titans (C₁) der allgemeinen Formel
(G₃SiO)₄₋ₓ,(Ti(G')ₓ entsprechen, worin
- die Symbole G, die identisch oder verschieden sind, Kohlenwasserstoffreste mit 1 bis 8 Kohlenstoffatomen, Alkoxyreste mit 1 bis 4 Kohlenstoffatomen, ß-Methoxyethoxylreste bedeuten,
- die Symbole G' Reste bedeuten, die in der Gruppe liegen, gebildet aus denjenigen der Formeln
-(OCH₂CH₂)_{b}0R⁴,
-OC(Q') =C(R⁵)COQ,
wobei zwei Reste G' zusammen den zweiwertigen Rest der Formel 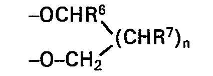 bilden können und dieser zweiwertige Rest durch seine zwei Valenzen an das Titan-Atom gebunden ist.
In diesen drei Formeln:
- bedeutet das Symbol R⁴ einen Alkylrest mit 1 bis 12 Kohlenstoffatomen,
- das Symbol b bedeutet Null oder Eins; wenn das Symbol b Null bedeutet, hat der Alkylrest R⁴ 2 bis 12 Kohlenstoffatome, und wenn das Symbol b 1 bedeutet, hat der Alkylrest 1 bis 3 Kohlenstoffatome,
- das Symbol Q bedeutet ein Wasserstoffatom, einen Alkylrest mit 1 bis 4 Kohlenstoffatomen, einen Phenylrest, einen Alkoxyrest mit 1 bis 5 Kohlenstoffatomen, einen Dialkylaminorest, dessen an das Stickstoffatom gebundene Alkylgruppen 1 bis 4 Kohlenstoffatome haben,
- das Symbol R⁵ bedeutet ein Wasserstoffatom, einen Methylrest, einen Chlormethylrest, einen Acetylrest,
- das Symbol Q' bedeutet einen Alkylrest mit 1 bis 5 Kohlenstoffatomen, einen Chlormethylrest,
- die Symbole R⁶ und R⁷, die identisch oder verschieden sind, bedeuten Wasserstoffatome, Methylreste,
- das Symbol n bedeutet Null, oder 2,
- das Symbol x bedeutet Null, Eins, Zwei oder Drei.

5. Verfahren gemäss einem der Ansprüche 1 bis 3, dadurch gekennzeichnet, dass die Derivate des Titans (C₂) der allgemeinen Formel entsprechen:
(G')_{y}Ti(OCOR⁸)_{4-y}, worin
- die Symbole G' die gleiche Bedeutung haben wie diejenige der Symbole G', die in Anspruch 4 beschrieben sind,
- das Symbol y eine ganze oder Bruchzahl von Null bis Vier bedeutet,
- das Symbol R⁸ bedeutet einen Kohlenwasserstoffrest mit 1 bis 20 Kohlenstoffatomen.

6. Verfahren gemäss einem der Ansprüche 1 bis 3, dadurch gekennzeichnet, dass die Derivate des Titans (C₂) Polytitanoxane sind, gebildet aus einer Folge von Gruppierungen der Formel:
-Ti(OCOR⁸)_{y}. [(OCH₂CH₂)_{b}OR⁴]_{2-y}O-
worin die Symbole R⁸, R⁴ und b die gleiche Bedeutung haben wie diejenige der Symbole R⁸, R⁴ und b, die in den Ansprüchen 4 und 5 beschrieben sind, und das Symbol y' 1 oder 2 bedeutet.

7. Zusammensetzungen gemäss einem der Ansprüche 1 bis 3, dadurch gekennzeichnet, dass die Derivate des Titans (C₂) Alkanolamintitanate sind.

8. Zusammensetzungen gemäss einem der Ansprüche 1 bis 4, dadurch gekennzeichnet, dass die Derivate des Titans (C₁) Produkte der teilweisen Hydrolyse der Verbindungen der Formel (G₃SiO)₄₋ₓ)Ti(G')ₓ, die in Anspruch 4 beschrieben ist, sind.

9. Zusammensetzungen gemäss einem der Ansprüche 1 bis 3 und 5, dadurch gekennzeichnet, dass die Derivate des Titans (C₂) Produkte der teilweisen Hydrolyse der Verbindungen der Formel (G')yTi(OCOR^{B})₄-y sind, die in Anspruch 5 beschrieben ist.

10. Zusammensetzungen gemäss einem der Ansprüche 1 bis 3, dadurch gekennzeichnet, dass die organischen Derivate des Zirkons (C) der Formel
Zr[(OCH₂CH₂)_{b}OR⁴J₄
entsprechen, worin die Symbole R⁴ und b die gleiche Bedeutung haben wie diejenige der Symbole R⁴ und b, die in Anspruch 4 beschrieben sind.

11. Zusammensetzungen gemäss Anspruch 1 und 10, dadurch gekennzeichnet, dass die organischen Derivate des Zirkons (C) Produkte der teilweisen Hydrolyse der Verbindungen der Formel
Zr[(OCH_{Z}CH_{Z})_{b}OR⁴]₄
die in Anspruch 10 beschrieben ist, sind.

## Claims (Claims for the following Contracting State(s) : s BE, CH, DE, FR, GB, IT, LI, NL, SE)

1. Single-component organopolysiloxane compositions which are stable in storage in the absence of water, cure to elastomers from ambient temperature upwards in the presence of water, and are formed by mixing the following constituents:
A) 100 parts of a polysiloxane substantially consisting of an a,ro-dihydroxydiorganopolysil- oxane polymer with a viscosity of 700 to 1 000 000 mPa s at 25 °C, consisting of a sequence of diorganosiloxy repeat units of formula R₂SiO in which the symbols R, which are identical or different, denote hydrocarbon radicals containing from 1 to 8 carbon atoms, substituted or otherwise by halogen atoms or cyano groups
B) to 25 parts of a crosslinking agent of formula RₐSl (OCOR¹)₄₋ₐ or of formula Rₐ,Si(ON=CR²₂)₄₋ₐ, in which the symbols R have the meaning given under A), the symbol R¹ denotes a hydrocarbon radical free from aliphatic unsaturation, containing from 1 to 15 carbon atoms, the symbols R², which are identical or different, denote alkyl radicals containing from 1 to 8 carbon atoms and the symbols a and a' denote zero or one
C) 0.004 to 0.095 part of a cure catalyst, and
D) 5 to 150 parts of inorganic fillers characterized in that the cure catalyst C) is either an organic titanium derivative or an organic zirconium derivative, which are chosen from the following compounds:
(i) the organic titanium derivative:
the compounds called (C,) which bear, per titanium atom, at least one organosilicon radical bonded to this titanium atom via a Ti-O-Si linkage, any other remaining valencies of the titanium atom being satisfied by radicals belonging to the group comprising organic radicals bonded to the titanium atom via Ti-O-C linkages, hydroxy radicals, oxygen atoms of the Ti-O-Ti linkages and, if desired, chelation linkages,
- the compounds called (C₂) which bear, per titanium atom, at least one organic radical bonded to this atom via a Ti-O-C linkage, any remaining valencies of the titanium atom being satisfied by radicals belonging to the group comprising hydroxy radicals, oxygen atoms of the Ti-O-Ti linkages, and, if appropriate, chelation linkages (2i) the organic zirconium derivative:
- the compounds which bear, per zirconium atom, at least one organic radical bonded to this zirconium atom via a Zr-O-C linkage but there are no Zr-OCO-linkages originating from a carboxylic acid residue, any other remaining valencies of the zirconium atom being satisfied by radicals belonging to the group comprising hydroxy radicals, oxygen atoms of the Zr-O-Zr linkages, and, if appropriate, chelation linkages.

2. Compositions according to Claim 1, characterized in that the titanium derivatives (Cᵢ) correspond to the general formula:
(G₃SiO)₄₋ₓTi(G')ₓ in which
- the symbols G, which are identical or different, denote hydrocarbon radicals containing from 1 to 8 carbon atoms, alkoxy radicals containing from 1 to 4 carbon atoms or p-methoxyethoxy radicals,
- the symbols G' denote radicals belonging to the group consisting of those of formulae:
-(OCH₂CH₂)_{b}OR⁴, and
-OC(Q') =C(R⁵)COQ,
two radicals G' can together form the divalent radical of formula: 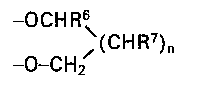 This divalent radical being attached by means of its 2 valencies to the titanium atom.
In these 3 formulae:
- the symbol R⁴ denotes an alkyl radical containing from 1 to 12 carbon atoms,
- the symbol b denotes zero or one; when the symbol b denotes zero, the alkyl radical R⁴ contains from 2 to 12 carbon atoms, and when the symbol b denotes 1, the alkyl radical contains from 1 to 3 carbon atoms,
- the symbol Q denotes a hydrogen atom, an alkyl radical containing from 1 to 4 carbon atoms, a phenyl radical, an alkoxy radical containing from 1 to 5 carbon atoms, or a dialkylamino radical in which the alkyl groups bonded to the nitrogen atom contain from 1 to 4 carbon atoms,
- the symbol R⁵ denotes a hydrogen atom, a methyl radical, a chloromethyl radical or an acetyl radical,
- the symbol Q' denotes an alkyl radical containing from 1 to 5 carbon atoms or a chloromethyl radical,
- the symbols R⁶ and R⁷, which are identical or different, denote hydrogen atoms or methyl radicals,
- the symbol n denotes zero, 1 or 2, and
- the symbol x denotes zero, one, two or three.

3. Compositions according to Claim 1, characterized in that the titanium derivatives (C₂) correspond to the general formula:
(G')yTi(OCOR⁸)₄_y in which:
- the symbols G' have the same meaning as that of the symbols G' described in Claim 2
- the symbol y denotes an integer or fraction from zero to four, and
- the symbol R⁸ denotes a hydrocarbon radical containing from 1 to 20 carbon atoms.

4. Compositions according to Claim 1, characterized in that the titanium derivatives (C₂) are polytitanoxanes consisting of a sequence of repeat units of formula:
-Ti(OCOR⁸)_{y},[(OCH₂CH₂)_{b}OR⁴]_{2-y}O-
in which the symbols R⁸, R⁴ and b have the same meaning as that of the symbols R⁸, R⁴ and b described in Claims 2 and 3 and the symbol y' denotes 1 or 2.

5. Compositions according to Claim 1, characterized in that the titanium derivatives (C₂) are alkanolamine titanates.

6. Compositions according to Claims 1 and 2, characterized in that the titanium derivatives (C,) are products of partial hydrolysis of the compounds of formula (G₃SiO)₄₋ₓTi(G')ₓ, described in Claim 2.

7. Compositions according to Claims 1 and 3, characterized in that the titanium derivatives (C₂) are products of partial hydrolysis of the compounds of formula (G')yTi(OCOR⁸)_{4-Y} described in Claim 3.

8. Compositions according to Claim 1, characterized in that the organic zirconium derivatives (C) correspond to the formula:
Zr[(OCH₂CH₂)_{b}OR⁴]₄
in which the symbols R⁴ and b have the same meaning as that of the symbols R⁴ and b described in Claim 2.

9. Compositions according to Claims 1 and 8, characterized in that the organic zirconium derivatives (C) are products of partial hydrolysis of the compounds of formula:
Zr[(OCH2CH2)bOR4]4
described in Claim 8.

## Claims (Claims for the following Contracting State(s) : AT)

1. Process for the preparation of a single-component organopolysiloxane composition which is stable in storage in the absence of water and cures to an elastomer from ambient temperature upwards in the presence of water, characterized in that the following constituents are stirred intimately in the absence of moisture, with or without the introduction of heat:
A) 100 parts of a polysiloxane substantially consisting of an a,w-dihydroxydiorganopolysil- oxane polymer with a viscosity of 700 to 1 000 000 mPa s at 25 °C, consisting of a sequence of diorganosiloxy repeat units of formula R₂SiO in which the symbols R, which are identical or different, denote hydrocarbon radicals containing from 1 to 8 carbon atoms, substituted or otherwise by halogen atoms or cyano groups
B) 2 to 25 parts of a crosslinking agent of formula RaSi(OCOR¹)₄₋ₐ or of formula Rₐ.Si (ON=CR₂²)₄₋ₐ in which the symbols R have the meaning given under A), the symbol R¹ denotes a hydrocarbon radical free from aliphatic unsaturation and containing from 1 to 15 carbonatoms, the symbols R², which. are identical or different, denote alkyl radicals containing from 1 to 8 carbon atoms and the symbols a and a' denote zero or one
C) 0.0004 to 0.095 part of a cure catalyst which is either an organic titanium derivative or an organic zirconium derivative, which are chosen from the following compounds:
(i) the organic titanium derivative:
- the compounds called (Cᵢ) which bear, per titanium atom, at least one organosilicon radical bonded to this titanium atom via a Ti-O-Si linkage, any other remaining valencies of the titanium atom being satisfied by radicals belonging to the group comprising organic radicals bonded to the titanium atom via Ti-O-C linkages, hydroxy radicals, oxygen atoms of the Ti-O-Ti linkages and, if appropriate, chelation linkages,
- the compounds called (C₂) which bear, per titanium atom, at least one organic radical bonded to this atom via a Ti-O-C linkage, any other remaining valencies of the titanium atom being satisfied by radicals belonging to the group comprising hydroxy radicals, oxygen atoms of the Ti-O-Ti linkages, and, if appropriate, chelation linkages
(2i) the organic zirconium derivative:
- the compounds which bear, per zirconium atom, at least one organic radical bonded to this zirconium atom via a Zr-O-C linkage but there are no Zr-OCO- linkages originating from a carboxylic acid residue, any other remaining valencies of the zirconium atom being satisfied by radicals belonging to the group comprising hydroxy radicals, oxygen atoms of the Zr-O-Zr linkages and, if appropriate, chelation linkages.
D) 5 to 150 parts of inorganic fillers.

2. Process for the preparation of a single-component organopolysiloxane composition which is stable in storage in the absence of water and cures to elastomers from ambient temperature upwards in the presence of water, chracterized in that:
a) the following are mixed intimately at a temperature of between 80 and -180 °C in a mixer in the absence of moisture:
A) 100 parts of a polysiloxane substantially consisting of an α―ω-dihydroxydiorganopolysil- oxane polymer with a viscosity of 700 to 1 000 000 mPa s at 25 °C, consisting of a sequence of diorganosiloxy repeat units of formula R₂SiO in which the symbols R, which are identical or different, denote hydrocarbon radicals containing from 1 to 8 carbon atoms, substituted or otherwise by halogen atoms or cyano groups and,
D) 5 to 150 parts of inorganic fillers,
b) cooling to a temperature of less than 60 °C is produced,
c) the following are then added while mixing:
B) 2 to 25 parts of a crosslinking agent of formula RₐSi(OCOR¹)₄₋ₐ or of formula Rₐ,Si(ON=CR²₂)_{4-a'} in which the symbols R have the meaning given under A), the symbol R¹ denotes a hydrocarbon radical free from aliphatic unsaturation, containing from 1 to 15 carbon atoms, the symbols R², which are identical or different, denote alkyl radicals containing from 1 to 8 carbon atoms and the symbols a and a' denote zero or one
C) either an organic titanium derivative or an organic zirconium derivative which are chosen from the following compounds:
(i) the organic titanium derivative:
- the compounds called (Cᵢ) which bear, per titanium atom, at least one organosilicon radical bonded to this titanium atom via a Ti-O-Si linkage, any other remaining valencies of the titanium atom being satisfied by radicals belonging to the group comprising organic radicals bonded to the titanium atom via Ti-O-C linkages, hydroxy radicals, oxygen atoms of the Ti-O-Ti linkages and, if appropriate, chelation linkages,
- the compounds called (C₂) which bear, per titanium atom, at least one organic radical bonded to this atom via a Ti-O-C linkage, any other remaining valencies of the titanium atom being satisfied by radicals belonging to the group comprising hydroxy radicals, oxygen atoms of the Ti-O-Ti linkages and, if appropriate, chelation linkages
(2i) the organic zirconium derivative:
- the compounds which bear, per zirconium atom, at least one organic radical bonded to this zirconium atom via a Zr-O-C linkage but there are no Zr-OCO- linkages originating from a carboxylic acid residue, any other remaining valencies of the zirconium atom being satisfied by radicals belonging to the group comprising hydroxy radicals, oxygen atoms of the Zr-O-Zr linkages and, if appropriate, chelation linkages.

3. Process according to Claim 1 or 2, characterized in that stage a) is performed under a pressure of between 500 and 10⁴ Pa.

4. Process according to any one of the preceding claims, characterized in that the titanium derivatives (Cᵢ ) correspond to the general formula:
(G3SiO)4-xTi(G')x in which
- the symbols G, which are identical or different, denote hydrocarbon radicals containing from 1 to 8 carbon atoms, alkoxy radicals containing from 1 to 4 carbon atoms or 0-methoxyethoxy radicals,
- the symbols G' denote radicals belonging to the group consisting of those of formulae:
-(OCH₂CH₂)_{b}OR⁴, and
-OC(Q') =C(R⁵)COQ,
two radicals G' may together form the divalent radical of formula: 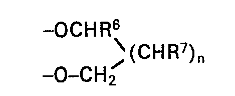 this divalent radical being bonded by means of its two valencies to the titanium atom.
In these 3 formulae:
- the symbol R⁴ denotes an alkyl radical containing from 1 to 12 carbon atoms,
- the symbol b denotes zero or one; when the symbol b denotes zero, the alkyl radical R⁴ contains from 2 to 12 carbon atoms, and when the symbol b denotes 1, the alkyl radical contains from 1 to 3 carbon atoms,
- the symbol Q denotes a hydrogen atom, an alkyl radical containing from 1 to 4 carbon atoms, a phenyl radical, an alkoxy radical containing from 1 to 5 carbon atoms, or a dialkylamino radical in which the alkyl groups bonded to the nitrogen atom contain from 1 to 4 carbon atoms,
- the symbol R⁵ denotes a hydrogen atom, a methyl radical, a chloromethyl radical or an acetyl radical,
- the symbol Q' denotes an alkyl radical containing from 1 to 5 carbon atoms or a chloromethyl radical,
- the symbols R⁶ and R⁷, which are identical or different, denote hydrogen atoms or methyl radicals,
- the symbol n denotes zero, 1 or 2, and
- the symbol x denotes zero, one, two or three.

5. Process according to any one of Claims 1 to 3, characterized in that the titanium derivatives (C₂) correspond to the general formula:
(G')yTi(OCOR⁸)₄_y in which:
- the symbols G' have the same meaning as that of the symbols G' described in Claim 4,
- the symbol y denotes an integer or fraction from zero to four, and
- the symbol R⁸ denotes a hydrocarbon radical containing from 1 to 20 carbon atoms.

6. Process according to any one of Claims 1 to 3, characterized in that the titanium derivatives (C₂) are polytitanoxanes consisting of a sequence of repeat units of formula:
-Ti(OCOR⁸)_{y},[(OCH₂CH₂)_{b}OR⁴]_{2-y},O-
in which the symbols R⁸, R₄ and b have the same meaning as that of the symbols R⁸, R⁴ and b described in Claims 4 and 5 and the symbol y' denotes 1 or 2.

7. Compositions according to any one of Claims 1 to 3, characterized in that the titanium derivatives (C₂) are alkanolamine titanates.

8. Compositions according to any one of Claims 1 to 4, characterized in that the titanium derivatives (C₁) are products of partial hydrolysis of the compounds of formula (G₃SiO)₄₋ₓTi(G')ₓ described in Claim 4.

9. Compositions according to any of Claims 1 to 3 and 5, characterized in that the titanium derivatives (C₂) are products of partial hydrolysis of the compounds of formula (G')_{y}Tl(OCOR⁸),_{4-y} described in Claim 5.

10. Compositions according to any one of Claims 1 to 3, characterized in that the organic zirconium derivatives (C) correspond to the formula:
Zr[(OCH₂CH₂)_{b}OR⁴]₄
in which the symbols R⁴ and b have the same meaning as that of the symbols R⁴ and b described in Claim 4.

11. Compositions according to Claims 1 and 10, characterized in that the organic zirconium derivatives (C) are products of partial hydrolysis of the compounds of formula:
Zr[(OCH₂CH₂)_{b}OR⁴]₄
described in Claim 10.
